# EUROPEAN PATENT SPECIFICATION

(11) **EP 4 394 667 B1**
(45) Date of publication and mention of the grant of the patent: **14.10.2026**
(21) Application number: 22216937.7
(22) Date of filing: 28.12.2022
(51) Int. Cl.: G06N 20/20, B60W 60/00, G06N 3/045, G06N 3/09, G06N 3/094, G06N 3/098, G06N 3/091, G06N 3/096, G06N 3/0985

(54) **TARGETED DATA GENERATION BY NEURAL NETWORK ENSEMBLES**
GEZIELTE DATENERZEUGUNG DURCH NEURONALE NETZWERKENSEMBLES
GÉNÉRATION DE DONNÉES CIBLÉES PAR DES ENSEMBLES DE RÉSEAUX NEURONAUX

(43) Date of publication of application: 03.07.2024
(73) Proprietor: Zenseact AB, 417 56 Gothenburg (SE)
(72) Inventor: VERBEKE, Willem, 412 60 Gothenburg (SE); LJUNGBERGH, William, 414 78 Gothenburg (SE)
(74) Representative: Zacco Sweden AB

(56) References cited:
- SABZEVARI SABZEVARI MARYAM MARYAM ET AL: "Vote-boosting ensembles", PATTERN RECOGNITION, 22 May 2018 (2018-05-22), pages 119 - 133, XP093050774, Retrieved from the Internet <URL:https://www.sciencedirect.com/science/article/pii/S0031320318301961> [retrieved on 20230531], DOI: 10.1016/j.patcog.2018.05.022
- NATRAS RANDA ET AL: "Ensemble Machine Learning of Random Forest, AdaBoost and XGBoost for Vertical Total Electron Content Forecasting", REMOTE SENSING, 24 July 2022 (2022-07-24), pages 3547, XP093050776, Retrieved from the Internet <URL:https://www.sciencedirect.com/science/article/pii/S2405896318333007> [retrieved on 20230531], DOI: 10.3390/rs14153547
- GUPTA MEENU ET AL: "Implementation of autonomous driving using Ensemble-M in simulated environment", SOFT COMPUTING, SPRINGER BERLIN HEIDELBERG, BERLIN/HEIDELBERG, vol. 25, no. 18, 21 June 2021 (2021-06-21), pages 12429 - 12438, XP037540723, ISSN: 1432-7643, [retrieved on 20210621], DOI: 10.1007/S00500-021-05954-4

## Description

### TECHNICAL FIELD

The disclosed technology relates to methods and systems for deep learning models and data generation for such deep learning models. In particular, but not exclusively the disclosed technology relates to targeted data generation for neural network learning models and neural network ensembles for recognition and characterization of various scenarios in a surrounding environment of a vehicle travelling on a road.

### BACKGROUND

Machine learning algorithms and neural networks have gained a strong position in solving complicated problems in various domains such as classification, detection, and segmentation tasks to name a few. The ability of these algorithms to perform complex and multidimensional tasks involving almost infinite data variations and combinations makes these models unequivocally well suited for the evermoreexpanding big data applications of today.

One specific area for which utilization of neural networks and deep learning models has presented ground-breaking possibilities is the emergence of autonomous vehicles.

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated to both the ADAS and the Autonomous Driving (AD) field. ADAS and AD will herein be referred to under the common term Automated Driving System (ADS) corresponding to all of the different levels of automation as for example defined by the SAE J3016 levels (0 - 5) of driving automation, and in particular for level 4 and 5.

ADS solutions have already found their way into a majority of the new cars on the market with utilization prospects bring only on the rise in the future. An ADS may be construed as a complex combination of various components that can be defined as systems where perception, decision making, and operation of the vehicle are performed by electronics and machinery instead of or in tandem with a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

An imperative aspect of achieving reliable autonomous functionality for the intended autonomous and semi-autonomous vehicles is to obtain a comprehensive understanding of the scenarios occurring in the surrounding environment of the vehicle. The unpredictable and dynamic scenarios including situations, events or objects in the surrounding environment of the vehicle and on the roads on which the vehicle is travelling can involve nearly endless varieties and complexities.

The neural network learning models have been used to some extent for characterization of such complex scenarios. However, the deep learning algorithms rely heavily on stringent training and verification schemes involving collecting and labelling a large amount of data representing various scenarios. Furthermore, at their core, these algorithms are only powerful interpolation tools, and thus cannot be expected to accurately extrapolate beyond the reach of their training regimes.

There is thus a pressing need in the art for novel and improved solutions and applications involving utilization of neural networks for characterization of complex and rare scenarios, with high accuracy, speed and certainty.

M. Sabzervari et al. in their 2018 paper "Vote-boosting ensembles" published by Elsevier describe vote-boosting, which is a sequential ensemble learning method designed to enhance the accuracy and robustness of classifiers. This approach focuses on the degree of disagreement among ensemble predictions for each training instance. During training, weights are assigned to instances based on the level of prediction uncertainty (disagreement rate) rather than whether they are correctly or incorrectly classified, as in traditional boosting algorithms like AdaBoost. When class-label noise is low, the method emphasizes instances with high disagreement among ensemble classifiers. Conversely, in high-noise settings, it reduces the emphasis on uncertain instances and instead focuses on instances with high classifier agreement.

The methodology involves using a beta distribution as an emphasis function to adjust the weights dynamically. The beta distribution parameters determine whether uncertain (high-disagreement) or certain (high-agreement) instances are emphasized. This weight adjustment is applied iteratively as the ensemble grows, with predictions aggregated using majority voting or weighted averaging. The optimal emphasis profile for a given dataset is determined using cross-validation. Empirical evaluations demonstrate that vote-boosting interpolates between methods like bagging and AdaBoost, depending on the choice of emphasis, and is particularly effective in handling noisy datasets and flexible classifiers like unpruned random trees.

R. Natras et al. in their paper "Ensemble Machine Learning of Random Forest, AdaBoost and XGBoost for Vertical Total Electron Content Forecasting" published by MDPI explore ensemble machine learning methods for forecasting Vertical Total Electron Content (VTEC), which reflects ionospheric variability critical to mitigating space weather impacts on GNSS (Global Navigation Satellite Systems). It evaluates tree-based algorithms such as Random Forest, AdaBoost, and XGBoost, comparing their performance to single regression trees. A meta-ensemble model, the Voting Regressor, combines these methods for enhanced accuracy. The models are trained and validated using time-series cross-validation to preserve temporal dependencies, with input data expanded through features like time derivatives and moving averages to better capture ionospheric variability. Results show that ensemble learning, particularly the Voting Regressor and XGBoost, outperforms traditional methods under both quiet and storm conditions, offering accurate VTEC forecasts with reduced errors. In short, they describe an approach to handling imbalanced datasets and new input feature engineering for improved generalization.

### SUMMARY

The herein disclosed technology seeks to mitigate, alleviate or eliminate one or more of the aboveidentified deficiencies and disadvantages in the prior art to address various problems relating to utilization of neural networks for characterization of complex and rare scenarios.

Various aspects and embodiments of the disclosed invention are defined below and in the accompanying independent and dependent claims. The term exemplary is in the present context to be understood as serving as an instance, example or illustration.

A first aspect of the disclosed technology comprises a method. The computer-implemented method comprises obtaining a trained ensemble of machine learning, ML, algorithms, comprising a plurality of ML algorithms that are trained to solve an object classification task, an object detection task, or a segmentation task at least partly based on a first set of training data. Each of the ML models is configured to process as input an image and to output for the image a prediction result. Moreover, the prediction result indicates a class from among a plurality of classes if the task is an object classification task, the prediction result indicates the position of an object that is present in the image if the task is an object detection task, and the prediction result segments the image if the task is a segmentation task. The method further comprises forming an input data set for the trained ensemble of ML algorithms by obtaining a synthetic training data set or by obtaining an unlabelled training data set, the input data set comprising one or more input data samples comprising information representative of one or more scenarios in a surrounding environment of a vehicle. Further, the method comprises providing the formed input data set to the trained ensemble of ML algorithms for generating, for each of the one or more input data samples, an ensemble prediction output. The ensemble prediction output for each of the one or more input data samples comprises prediction outputs generated by each of the ML algorithms comprised in the ensemble of ML algorithms for that sample of the one or more input data samples. In response to a determined discrepancy in the ensemble prediction output for a particular input data sample, the method further comprises forming a second training data set based on that particular input data sample and updating the first training data set with the formed second training data set for training the ensemble of ML models to solve the task by using the updated first training data set.

According to another aspect of the present disclosure, wherein for the input data set formed based on the obtained synthetic training data set, the one or more input data samples correspond to one or more synthetic data samples. The synthetic training data set is artificially generated for constructing a scenario in a surrounding environment of a vehicle. The computer-implemented method further comprises determining the discrepancy in the ensemble prediction output for a particular synthetic data sample by comparing, for each of the one or more synthetic data samples, the prediction output of each ML algorithm of the ensemble with the prediction output of each of a rest of the ML algorithms comprised in the ensemble. In response to the determined discrepancy in the ensemble prediction output for that particular synthetic data sample, the method further comprises forming the second training data set comprising that particular synthetic data sample and updating the first training data set with the formed second training data set for training the ensemble of ML models to solve the task by using the updated first training data set.

According to yet another aspect of the present disclosure, wherein for the input data set formed based on the obtained unlabelled training data set, the one or more input data samples correspond to one or more unlabelled data samples. The unlabelled training data set comprises information obtained at least partly from a sensor system of a vehicle and being a representative of a scenario in a surrounding environment of the vehicle. The computer-implemented method further comprises determining the discrepancy in the ensemble prediction output for a particular unlabelled data sample by comparing, for each of the one or more unlabelled data samples, the prediction output of each ML algorithm of the ensemble with the prediction output of each of a rest of the other ML algorithms comprised in the ensemble. In response to the determined discrepancy in the ensemble prediction output for that particular unlabelled data sample, the method further comprises identifying one or more condition-specific parameters causing the determined discrepancy for that particular unlabelled data sample. The method further comprises generating a condition-specific synthetic training data set comprising one or more condition-specific synthetic data samples representative of the identified one or more condition-specific parameters for that particular unlabelled data sample. Further, the method comprises forming the second training data set comprising the generated condition-specific synthetic training data set and updating the first training data set with the formed second training data set for training the ensemble of ML models to solve the task by using the updated first training data set.

The present inventors have realized that by the proposed solutions according to the methods and systems disclosed herein, shortcomings associated with information gaps in the training data sets for ML algorithms can be efficiently and rapidly mitigated. The proposed data-driven approach of the present disclosure provides a flexible, cost-efficient, and rapid approach for generating training data for training neural networks and ML algorithms, specifically for scenarios for which many samples of real-world data neither can be collected nor may be available. This in turn leads to drastic improvements on reliability of deep learning models providing scalability, speed and reproducibility in addressing a large variety of scenarios, which may occur in the surrounding environment of the vehicles involving multiple environmental variables or conditions. The presented methods and systems exploit ensembles of neural networks or ML algorithms to identify and characterize cases in which the ML algorithms provide unreliable predictions due to extrapolating outside the boundaries of their respective training data sets. Such scenarios may lead to discrepancies in the prediction outputs of the ML algorithm ensembles referred also herein as out-of-distribution (OOD) scenarios. Introducing the characterized OOD scenarios into the training regime of the neural networks improves the reliability and robustness of these ML algorithms when exposed to unconventional real-world challenges.

In some embodiments, the discrepancy in the ensemble prediction output for the particular input data sample may be determined when the prediction output generated by at least one of the ML algorithms comprised in the ensemble is incompatible with the prediction outputs generated by one or more of the other ML algorithms of the ensemble for that particular input data sample.

In several embodiments an aspects, the method may further comprise training the ensemble of ML algorithms by using the updated first set of training data.

In various embodiments and aspects, the vehicle may comprise an Automated Driving System, ADS. In several aspects and embodiments, the various aspects and embodiments of the methods presented herein may be performed by a processing circuitry of the vehicle.

In a fourth aspect of the disclosed technology, there is provided a (non-transitory) computer-readable storage medium storing one or more programs configured to be executed by one or more processors of a processing system, the one or more programs comprising instructions for performing the method according to any one of the embodiments of the method disclosed herein.

With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a fifth aspect of the present disclosure, there is provided a computer program product comprising instructions which, when the program is executed by one or more processors of a processing system, causes the processing system to carry out the method according to any one of the embodiments of the method disclosed herein.

According to a further sixth aspect, there is provided a system. The system comprises processing circuitry configured to obtain a trained ensemble of machine learning, ML, algorithms, comprising a plurality of ML algorithms that are trained to solve an object classification task, an object detection task, or a segmentation task at least partly based on a first set of training data. Each of the ML models is configured to process as input an image and to output for the image a prediction result. Moreover, the prediction result indicates a class from among a plurality of classes if the task is an object classification task, the prediction result indicates the position of an object that is present in the image if the task is an object detection task, and the prediction result segments the image if the task is a segmentation task. The processing circuitry is further configured to form an input data set for the trained ensemble of ML algorithms by obtaining a synthetic training data set or by obtaining an unlabelled training data set, the input data set comprising one or more input data samples comprising information representative of one or more scenarios in a surrounding environment of a vehicle. Further, the processing circuitry is configured to provide the formed input data set to the trained ensemble of ML algorithms for generating, for each of the one or more input data samples, an ensemble prediction output. The ensemble prediction output for each of the one or more input data samples comprises prediction outputs generated by each of the ML algorithms comprised in the ensemble of ML algorithms for that sample of the one or more input data samples. In response to a determined discrepancy in the ensemble prediction output for a particular input data sample, the processing circuitry is further configured to form a second training data set based on that particular input data sample and update the first training data set with the formed second training data set for training the ensemble of ML models to solve the task by using the updated first training data set.

According to yet another seventh aspect there is provided a vehicle comprising one or more vehicle-mounted sensors configured to monitor a surrounding environment of the vehicle. The vehicle further comprises a localization system configured to monitor a pose of the vehicle i.e. geographical position and heading of the vehicle on a road. The vehicle further comprises a system according to the sixth aspect and various embodiments of the sixth aspect. The vehicle may further comprise an ADS system for controlling one or more of acceleration, steering, and braking of the vehicle.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

It is to be noted that all the embodiments, elements, features and advantages associated with the first aspect also analogously apply to the second, third, fourth, fifth, sixth and the seventh aspects of the present disclosure.

Further embodiments of the presented methods and systems are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings. The drawings are not to scale.
Figs. 1a-1d show schematic block diagrams in accordance with several embodiments of the present disclosure.
Fig. 2 illustrates a schematic top view of a road and at least one vehicle traveling on the road in accordance with several embodiments of the present disclosure.
Figs. 3a-3c show schematic flowcharts illustrating methods in accordance with several embodiments of the present disclosure.
Fig. 4 shows a schematic side view illustration of the vehicle comprising the control system in accordance with some embodiments of the present disclosure.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth. As used herein, the term "if" may be construed to mean "when or "upon" or "in an instance of" or "in response to determining or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

In the following description of exemplary embodiments, the same reference numerals denote the same or similar components.

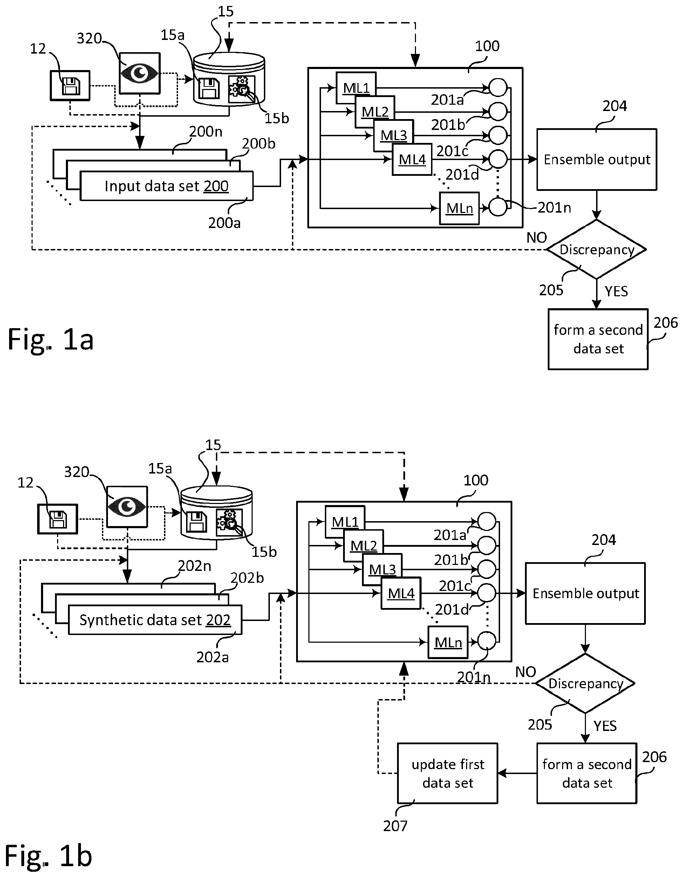

Figs. 1a-1d show schematic block diagrams illustrating an ensemble 100 of ML algorithms comprising a plurality of ML algorithms ML₁-MLₙ according to the presented technology. The ML ensemble 100 is accordingly implemented and deployed according to various aspects and embodiments of the present disclosure.

Fig. 1a shows the block diagram of the trained ML algorithm ensemble 100 configured for receiving an input data set 200 comprising one or more input data samples 200a - 200n, with the dotted line indicating the plurality of input data samples 200a - 200n comprised in the input data set 200.

The ML algorithm ensemble may be obtained from a server 15 or a log file, memory or data storage 15a of the server 15. The obtained ML algorithm ensemble 100 may have been previously trained with a training data set and stored in the data storage 15a for subsequent execution. The obtained ML algorithm ensemble 100 may have been trained with a training data set curated for training each ML algorithm comprised in the ML algorithm ensemble 100.

The ML algorithm ensemble 100 may be trained continuously and repeatedly with the training data set. According to several embodiments and aspects, the training data set may be modified, updated, or complemented in various stages of the training process. In some aspects and embodiments, the trained ML algorithm ensemble 100 may be considered as a preliminarily trained ML algorithm ensemble 100 trained with a current version of the training data set that is continuously updated by obtaining further data samples and data classes. Thus, the ML algorithm ensemble 100 may be continuously retrained with updated versions of the training data set.

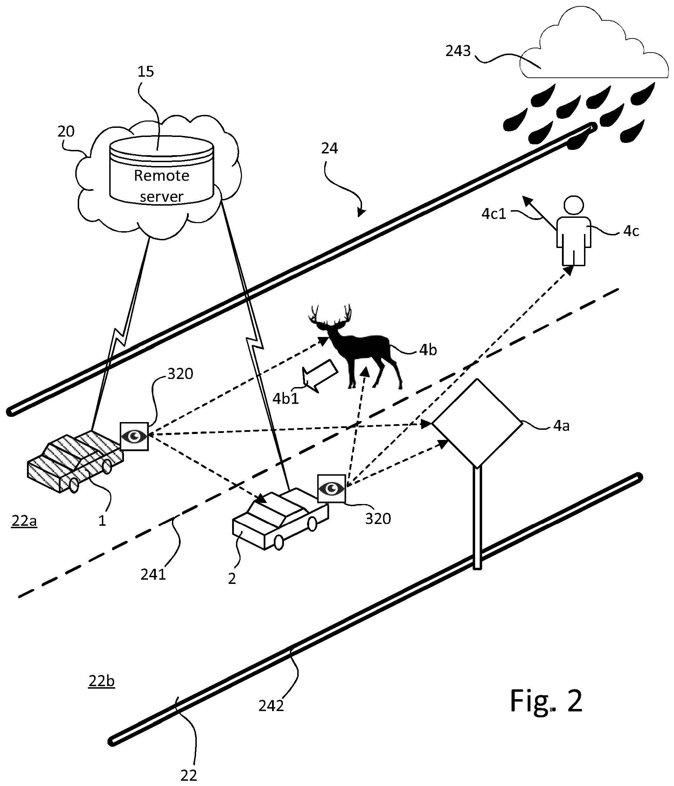

The training data set may comprise a first training data set. Thus, the ML algorithm ensemble may be trained at least partly based on the first training data set. The first training data set may be obtained and curated based on various data collection and classification approaches. The first training data set may be obtained from the server 15, and may be formed based on the information of a surrounding environment of a vehicle. In several embodiments and aspects, the first training data set may at least partly be formed based on sensor data obtained by a sensor system 320 of a vehicle 1, 2 travelling on a road 22 as explained further with reference to Fig. 2. The sensor data may comprise related information and be representative of a variety of scenarios which may occur in the surrounding environment of the vehicle 1, 2. The sensor data may be transmitted to the server 15 or may be stored in a memory 12 of the vehicle 1 for future transmission to the server 15 and/or for local utilization in the vehicle 1.

In some embodiments and aspects, the training data set may further comprise a synthetic data set formed for training the ML algorithm ensemble on artificially constructed realities.

Even though various features, elements and advantages of the presented technology are extensively explained with reference to one ML algorithm ensemble 100, it should be appreciated by the persons skilled in the relevant art that the methods and systems described herein may be equally implemented in one or more ML algorithm ensembles.

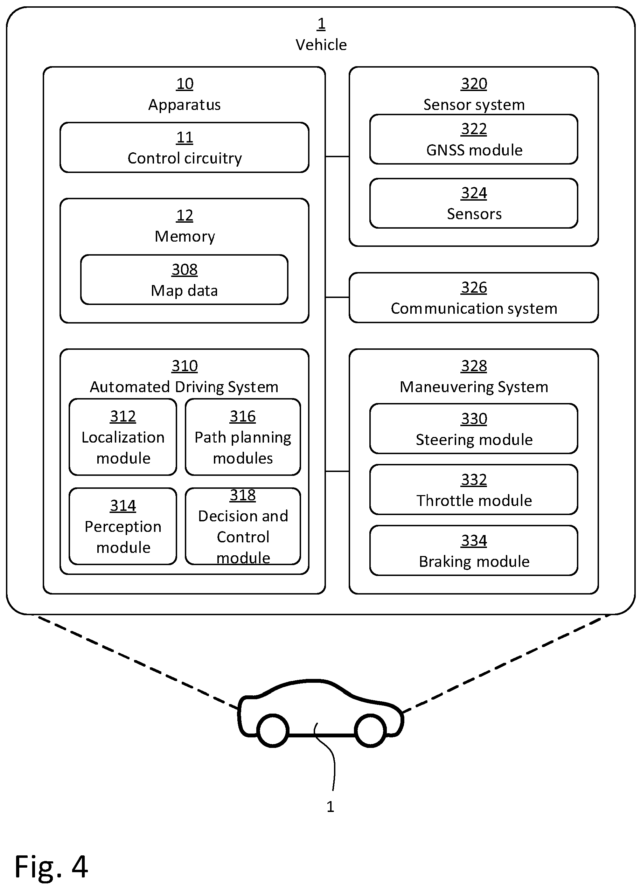

Various aspects and embodiments of the presented technology, and the corresponding systems and methods may be implemented and executed by means of processing circuitry comprising one or more processors. The processing circuitry may at least partly be comprised in a control system 15b or apparatus 15b implemented in the data center 15 or server 15. In some embodiments and aspects, the control system 10 or apparatus 10 may be comprised in a vehicle such as vehicles 1, 2 as described in more detail with reference to Fig. 2 and Fig. 4.

As mentioned earlier, machine learning algorithms and neural networks such as supervised machine learning algorithms, may be conventionally trained, tested and verified based on a massive amount of real-world data. The training data is usually obtained through driving the vehicle 1 on various types of roads under a variety of environmental conditions and for suitable periods of time to collect and evaluate large data sets of detected scenarios on the road. However, the very large variety of objects and scenarios which may occur on the road and in the surrounding environment of the vehicle render the task of data collection and formation of comprehensive training data sets practically unattainable. This is even more relevant for scenarios when the objects or events involve rare or less frequent circumstances for which adequate amount of data may not be easily collected. Even further, simply collecting more data may not be enough to comprehensively characterize such extremely rare scenarios, which ultimately leads to a diminished reliably of the ML algorithms for handling these scenarios. In other words, when unpredictable situations are encountered, neural networks may produce, albeit with high confidence, sporadic and unreliable predictions due to information gaps in their training data sets.

The present inventors have realized that by the proposed solution herein the shortcomings associated with information gaps in the training data sets for the ML algorithms can be efficiently and rapidly mitigated. The proposed data-driven approach of the present disclosure provides a flexible, cost-efficient, and rapid approach for generating training data for training neural networks and ML algorithms, specifically for scenarios for which many samples of real-world data neither can be collected nor may be available. This in turn leads to drastic improvements on reliability of deep learning models providing scalability, speed and reproducibility in addressing a large variety of scenarios, which may occur in the surrounding environment of the vehicles involving multiple environmental variables or conditions. The presented methods and systems exploit ensembles of neural networks or ML algorithms to identify and characterize cases in which the ML algorithms provide unreliable predictions due to extrapolating outside the boundaries of their respective training data sets. Such scenarios may lead to discrepancies in the prediction outputs of the ML algorithm ensembles referred also herein as out-of-distribution (OOD) scenarios. Introducing the characterized OOD scenarios into the training regime of the neural networks improves the reliability and robustness of these ML algorithms when exposed to unconventional real-world challenges.

Moving on, the ML models ML₁-MLₙ comprised in the ML model ensemble 100 are trained at least partly by the first training data set to perform a variety of tasks including object classification, detection, or segmentation tasks, and produce corresponding prediction outputs 201a - 201n for each data sample 200a - 200n of the input data set 200. For instance, the ML algorithms ML₁-MLₙ of the ensemble 100 in Fig. 1a generate the prediction outputs 201a - 201n for the input data sample 200a. Prediction outputs will similarly be generated by the ML algorithms ML₁-MLₙ of the ensemble 100 for other input data samples comprised in the input data set 200.

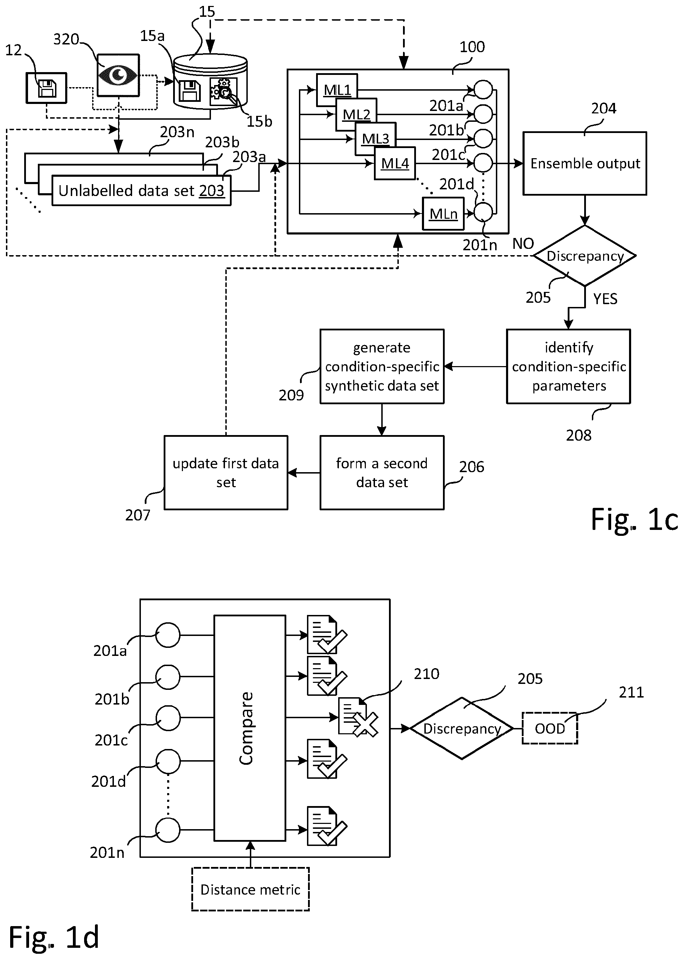

In several embodiments and aspects, the input data set 200 may be formed for the trained ensemble 100 of ML algorithms ML₁-MLₙ by obtaining a synthetic training data set 202 as shown and explained in more detail with reference to Fig. 1b. In several embodiments and aspects, the input data set 200 may be formed for the trained ensemble 100 of ML algorithms ML₁-MLₙ by obtaining an unlabelled training data set 203 as shown and explained in more detail with reference to Fig. 1c. By synthetic training data set or unlabelled training data set in the present context it is meant the input data curated for the trained ensemble 100 in order to investigate anomalies and identify OOD scenarios. The OOD portions or sub-sets of the input synthetic training data set 202 or the unlabelled training data set 203 may later on be utilized to further train the ML algorithms of the ML ensemble 100.

In several aspects and embodiments, the ML algorithm ensemble 100 is configured to obtain the formed input data set 200 and generate, for each of the one or more input data samples 200a - 200n comprised in the input data set 200, an ensemble prediction output 204. As explained in the foregoing for data sample 200a, the ensemble prediction output 204 for each of the one or more input data samples comprises prediction outputs generated by each of the ML algorithms ML₁-MLₙ comprised in the ensemble 100 of ML algorithms for that sample 200a of the one or more input data samples 200a - 200n. The ML algorithm ensemble 100 is configured such that in response to a determined discrepancy 205 in the ensemble prediction output 204 for a particular input data sample e.g. data sample 200a, a second training data set is formed 206. In several embodiments and aspects, the second training data set is formed 206 based on that particular input data sample 200a.

For instance, the ML algorithms ML₁-MLₙ may be configured for solving an object detection task, using image data of a target object e.g. one or more images of an object 4a-4c depicted in Fig. 2, and produce prediction outputs comprising probability scores for the coordinates of the target object 4a-4c in the image data. The produced prediction outputs i.e. the coordinates for the same target object using the same image data (e.g. input data sample 200a) by all the ML models ML₁-MLₙ comprised in the ML model ensemble 100 can then be used to probe for anomalous input data samples. For instance, it could be surveyed whether the ML algorithms generate substantially homogeneous predictions for the position coordinates of the target object 4a-4c based on its corresponding image data.

The ML algorithm may utilize several methods and approaches known in the art for forming estimates and predictions of the at least one object. By way of example only, the object detection ML algorithms may output a per-pixel map with confidence measures for each pixel denoting whether the pixel belongs to an object or not. A threshold value may be introduced each pixel confidence measure may be compared with the threshold value. The pixels with confidence measures exceeding the threshold value can then be identified as belonging to the respective object. The approved pixels may be clustered and a final object confidence measure may be selected, e.g., to be the same as the confidence measure of the pixel having the highest confidence measure. Other parameters, such as the bounding box prediction, 3D distance, etc. may also be determined per pixel. The object detection ML model would similarly output a map of pixels, wherein each pixel is associated with a plurality of parameters as mentioned above. The accumulation of these parameters may then be used by the ML algorithm to form its predictions on the object.

Discrepancies on the predictions of the ML algorithm may be surveyed and identified at any stage of the object detection process e.g. while estimating one or more of the above-mentioned parameters determined for forming a prediction on an object. Accordingly, comparison may be made for the output coordinates of each ML algorithm with the output coordinates produced by each of the rest of the ML algorithms ML₁-MLₙ in the ensemble 100 by utilizing similarity metrics and distance measurements e.g. by means of cosine similarity or Euclidian distance metrics or determination of entropy amongst the prediction outputs. Evidently, any other attributes of the objects or scenarios than the position coordinates may be inspected and OOD data samples may be extracted.

In the example above, we assume that ML3 generates a prediction output 201c to the input data sample 200a which corresponds to a sporadic and dissimilar position coordinates for the target object 4a-4c compared to the prediction outputs of the other ML algorithms comprised in the ensemble 100.When this incompatibility 210 amongst the prediction outputs of one or several of the ML algorithms is identified, e.g. as shown for prediction output 201c of the ML3 to the input data sample 200a in the example of Fig. 1d, discrepancy 205 in the prediction output 204 of the ML algorithm ensemble 100 is determined.

The input data sample 200a causing the discrepancy in the prediction outputs of the ML algorithms ML₁-MLₙ may accordingly be labelled 211 as an OOD data sample 200a and is included in the second data set 206.

It should be clear to the skilled person that the second training data set may be formed for several OOD input data samples that create anomalous prediction outputs. The second training data set may be continuously updated as new OOD input data samples emerge. In several embodiments, the first training data set may be updated with the second training data set formed based on the one or more OOD input data samples.

The OOD data may refer to anomalous data or data generating significantly different prediction outputs for ML algorithms of the ensemble 100. The OOD data may also be different from training data comprised in the first training data set used initially to train the ensemble 100.

Distribution in the present context may have different meanings for various tasks performed by the ML algorithms e.g. "within distribution" data for a vision-based task of classification of a certain type of vehicle may be the image data samples all depicting that certain type of vehicle, and the "out of distribution" data may be an image data sample depicting a bicycle. In some examples, irregular shapes, unusual color of the painted objects, and any other attributes may be considered.

Thus, the presented systems and methods may be similarly applied for determination of discrepancy 205 in the prediction output of ML algorithm ensemble 100 being configured to solve classification or segmentation tasks. For example, for a classification task, probabilistic scores may be utilized for comparison of the prediction outputs of the ML algorithms of the ensemble 100 to determine if a certain input data sample belongs to a certain data class or if it is an OOD data sample for that data class.

It should be appreciated that the above-mentioned one or more ML algorithms ML₁-MLₙ comprised in the ensemble 100, may be similar or identical ML algorithms which have been trained at least partly based on the same or similar training data sets e.g. the first data set. By being similar or identical in the present context, it is to be construed that the ML algorithms ML₁-MLₙ comprised in the ML algorithm ensemble 100 have very similar or the same architectures, very similar or the same initialization parameters, and are expected to largely exhibit the same behaviour when exposed to input data similar to the training data set. By being trained at least partly based on the same or similar training data sets in the present context it is to be construed that one or more of the ML algorithms comprised in the ensemble are trained using a particularly curated training data set, or different versions of that data set or sub-sets of that data set. In some embodiments, some of the one or more ML algorithms may be trained on a first sub-set of the training data set e.g. the first data set, and some other ML algorithms may be trained on a second sub-set of the training data set e.g. the first data set. In some examples different versions or compilations of the first training data set may be used to train one or more of the ML algorithms comprised in the ensemble.

However, when an input data sample is an OOD sample leading to discrepancy in the prediction output of the ensemble 100, the ML algorithms ML₁-MLₙ comprised in the ML algorithm ensemble 100 may produce sporadic and incompatible prediction outputs for the OOD data sample with significant variations. In some examples and embodiments, variations in the prediction outputs of the ML algorithms may be measured against a prediction output-variation threshold value. The prediction output-variation threshold value may e.g. be associated with the Euclidian distance or the cosine distance metric applied to the prediction outputs of the ML algorithms ML₁-MLₙ to the OOD input data sample. In some embodiments, a probability score may be assigned to the prediction outputs of the ML algorithms ML₁-MLₙ for each input data sample and when the probability score for a particular data sample falls below the variation threshold, it is determined that the particular input data sample is an OOD input data.

Fig. 2 shows a schematic perspective top view of a collection of exemplary scenarios, which may occur in a surrounding environment of vehicles travelling on roads, in accordance with several embodiments of the present disclosure. Needless to mention that the depicted scenarios comprising objects, events, incidents and scenes in Fig. 2 are simply there to elucidate the functionalities and implementations of the systems and methods disclosed herein. The skilled person understands that many other arising situations and scenarios may be comprised in different embodiments and aspects and equally considered for the purposes of the present disclosure.

Fig. 2 illustrates a vehicle 1 in a hatched line shaded pattern traveling on a portion 24 of a road 22. Moreover, Fig. 1 shows at least one external vehicle 2 traveling on the same portion 24 of a road 22 as the vehicle 1. The vehicles 1, 2 in several embodiments and aspects comprise a sensor system 320 configured for detecting the scenarios which may occur in the surrounding environment of vehicles 1, 2 travelling on road 22. The sensor system 320 is configured for collection of information about the surrounding environment of the vehicles 1, 2. The surrounding environment of the vehicle can be understood as a general area around the vehicle 1, 2 in which scenarios comprising objects (such as other vehicles, landmarks, obstacles, etc.) or scenes can be detected and identified by vehicle sensors (radar, LIDAR, cameras, etc.), i.e. within a sensor range of the vehicle. In several embodiments and aspects, the sensor data comprising information about the surrounding environment of the vehicles may be utilized to generate labelled data samples and data classifications for forming the first training data set. The first training data set may be used for training each of the ML algorithms comprised in the ML algorithm ensemble as explained with reference to Fig. 1a.

Vehicle 2 may be an identical or similar vehicle to the vehicle 1 i.e. having the same or similar functionalities and components and capable of executing and performing various aspects of the presented technology herein. Vehicle 1 and vehicle 2 may be a part of a fleet of vehicles travelling on roads such as road 22. In several embodiments and aspects data from the fleet of vehicles comprising one or more vehicles 1, 2 may be collected and analyzed.

The vehicle 1 and/or the at least one external vehicle 2 may comprise an Automated Driving System (ADS). In the present context, the ADS comprises both ADAS and AD systems. In some embodiments, the ADS of the vehicle may comprise one or more ADS features that are preferably a level 2 feature or higher according to SAE J3016 levels of driving automation for on-road vehicles. In the present context, an ADS feature may be in the form of an autopilot feature, a traffic jam pilot, a highway pilot, or any other SAE J3016 level 2+ ADS feature.

The vehicle 1, 2 comprises a control system 10 or otherwise referred to as the control apparatus 10 which may be a separate entity or may be a part of the overall ADS architecture of the vehicle, and may accordingly be a module or component of the ADS. The control system 10 of the vehicle 1, 2 comprises control circuitry 11 or otherwise referred to as processing circuitry 11 configured to obtain data comprising information about the surrounding environment of the vehicle 1. As mentioned earlier, the information and data of the surrounding environment of the vehicle 1, 2 may be obtained from the sensor system 320 of the vehicle.

The obtained sensor data may comprise information about at least one static or moving object in the surrounding environment of the vehicle. As depicted in Fig. 2, there is at least one object 4a, 4b, 4c present in the surrounding environment of the vehicle 1 and vehicle 2 on the road portion 24. The at least one object 4a, 4b, 4c may be a traffic object such a traffic sign or signal such as traffic lights or warning signs, etc. or in some embodiments may include wild life or various species of animals 4b, pedestrians 4c, external vehicles, road barriers, lane markers etc. The at least one object may be intentionally arranged such as the traffic object 4a or may be present on the road 22 at certain occasions such as the pedestrian 4c or the animal 4b crossing the road 22.

Further, the obtained sensor data may comprise information about any one of lane marker 241, 242 geometry on the one or more lanes of the road 22, lane marker type (e.g. solid, dashed, double marker, etc.) on the road 22, traffic sign information 4a, road barrier information, such as presence or characteristics of speed bumps, or any other road obstruction objects, etc.

In several aspects and embodiments, the sensor data may comprise one or more images of the surrounding environment of the vehicle being captured by a vehicle-mounted camera (not shown) as a part of the sensor system 320. The camera in the present context also includes a plurality of vehicle-mounted cameras mounted on several parts of the vehicle 1, 2 for capturing images of a surrounding environment of the vehicle. Furthermore, the sensor data may comprise LIDAR or radar observations of the surrounding environment of the vehicle 1, 2.

The captured images and/or LIDAR and/or radar data may be stored locally in a memory 12 of the vehicle 1, 2 and/or be transmitted to an external network 20 such as a cloud network 20, or to the remote server 15 with which the vehicle 1, 2 is in communication.

In several examples and embodiments the road 22 may be any type of road e.g. part of a motorway, freeway or expressway. The road may also be a country road, rural road or any other carriageway. The road may have a plurality of lanes such as more than one lane in the same travelling direction e.g. two or more lanes 22a, 22b or at least one lane in each travelling direction as is usually the case for rural roads. The road 22 has two lanes 22a and 22b extending in the same direction in this example. The lanes 22a, 22b may comprise lane markers 241, 242 of different types e.g. lane marker 241 showing dashed lane marker type and the lane marker 242 showing solid lane marker type.

The control system 10 of the vehicle 1, 2 may accordingly be configured to register the scenarios occurring in the surrounding environment of the vehicles 1, 2. The scenarios in some embodiments may correspond to a scene or an event or an incident which may occur in the surrounding environment of the vehicles. In some embodiments a scenario may be determining a presence of at least one object 4a, 4b, 4c in the surrounding environment of the vehicle 1, 2 based on the obtained sensor data. In addition, registering scenarios in the present context may further comprise semantic segmentation approaches for lane detection or road surface detection, etc.

For instance in Fig. 2, determination of presence of the traffic object 4a, the pedestrian 4c or the animal 4b may correspond to various scenarios occurring in the surrounding environment of the vehicle 1, 2. Furthermore, the pedestrian 4c crossing the road 22 in the direction of arrow 4c1, and/or the animal 4b moving towards vehicle 1 in the direction of arrow 4b1, and/or a driving behavior of either of the vehicles 1 or 2 from perspective of the other vehicle, also constitute a variety of scenarios in the surrounding environment of the vehicle 1, 2.

Additionally, occasions of identification and recognition of two or more of the above-mentioned scenarios give rise to additional combined scenarios that may be determined and registered. The environmental conditions such as the road conditions, time of day, lighting conditions, unforeseen incidents and accidents on the road 22, weather conditions 243 in the area 24 e.g. the amount of precipitation, humidity, temperature, etc. which may co-occur with any of the above-mentioned scenarios may further give rise to a whole new range of scenarios with multiple associated variables. The events and scenarios, which may occur at a certain time point, on a certain geographical location and for a certain vehicle 1, 2 may thus be numerous, giving rise to a significant number of rare and challenging circumstances that may introduce vital information gaps into the training regime of ML algorithms.

According to several aspects and embodiments of the presented solution, synthetic data may be generated for representing such rare and challenging scenarios. The synthetic data may be generated to construct various scenarios and respective nuances for each scenario. The synthetic data may generate scenarios for which no real-world data is available. In some embodiments, the synthetic data may be simulated data constructed based on arbitrarily generated input parameters. Different approaches and algorithms or ML models may be utilized for constructing the synthetic data set.

In several embodiments, the synthetic data may be generated for mimicking various aspects of an identified real-world scenario e.g. different shades of lighting affecting an obtained camera image of a traffic object, variations of precipitation and atmospheric conditions affecting the surface of the road 22 e.g. on a specific road portion 24, etc.

In various embodiments and aspects, the generated synthetic data set representing constructed and/or mimicked scenarios in the surrounding environment of the vehicle 1, 2 is provided as input data set to the ML algorithm ensemble 100 of the presented solution.

Returning to Fig. 1a and more specifically to Fig. 1b, the synthetic training data set 202 comprising one or more synthetic training data samples 202a - 202n being artificially generated for constructing a scenario in the surrounding environment of the vehicles 1, 2, is formed and provided as input data set to the ensemble 100.

The ML algorithm ensemble 100 may be configured to determine the discrepancy 205 in the ensemble prediction output 204 for a particular synthetic data sample. It should be appreciated that the discrepancy may be determined for one or more particular synthetic data samples comprised in the synthetic training data set 202.

The ML Algorithm ensemble 100 may be configured to determine such a discrepancy by comparing, for each of the one or more synthetic data samples 202a - 202n, the prediction output 201a - 201n of each ML algorithm ML₁-MLₙ comprised in the ensemble 100 with the prediction output 201a - 201n of each of a rest of the ML algorithms comprised in the ensemble. In other words, when the ML algorithms ML₁-MLₙ generate their respective prediction outputs 201a - 201n for a particular synthetic data sample e.g. sample 202a, all the prediction outputs are compared with one another and surveyed for discrepancies similar to the approach explained with reference to Fig. 1a. Similarly, distance measurement techniques and approaches may be utilized for determining the discrepancies.

Analogously and as a similar example to the example of Fig. 1a, ML3 in Fig. 1d may generate a prediction output 201c for the synthetic input data sample 202a which corresponds to a sporadic and dissimilar output compared to the prediction outputs of the other ML algorithms comprised in the ensemble 100. When this incompatibility 210 for the prediction outputs of one or more of the ML algorithms is identified, discrepancy 205 in the prediction output 204 of the ML algorithm ensemble 100 is determined for the one or more particular synthetic data samples. In response to the determined discrepancy 205 in the ensemble prediction output 204 for the particular synthetic data sample 202a comprised in the synthetic input data set 202, a second training data set comprising that particular synthetic data sample 202a may be formed 206.

The synthetic data sample 202a causing the discrepancy 205 in the prediction outputs of the ML algorithms ML₁-MLₙ may accordingly be labelled 211 as an OOD synthetic data sample 202a and may be included in the second data set 206. It should be clear to the skilled person that the second training data set may be formed for several OOD synthetic data samples that create anomalous prediction outputs. The second training data set may be continuously updated as new OOD synthetic data samples emerge. In several embodiments, the first training data set may be updated 207 with the second training data set formed based on the one or more OOD synthetic data samples.

The combination of generated synthetic data set and trained ML algorithm ensemble 100 according to the presented solution provide a powerful approach for investigating and identifying scenarios leading to discrepancies in the prediction outputs of the ML algorithm ensemble, which would have otherwise remained unnoticed, using only labelled training data sets. Any one or more particular synthetic data samples representing a scenario leading to incongruence in the prediction outputs of one or more ML algorithms comprised in the ML algorithm ensemble would be labelled as OOD data sample. The OOD data samples may be utilized for improving the training data sets, by updating the first training data set. In several embodiments, the ML algorithms of the ensemble 100 may be retrained with updated first training data set comprising the OOD data samples, which in turn will result in more robust prediction outputs of the ML algorithms to unusual real-world scenarios.

Generating a massive amount of varied synthetic data according to the aspects of the present solution contributes effectively to covering subtle nuances and mitigating a large extent of deficiencies due to information gaps in the training data for the ML algorithms. However, if utilized in an unbounded manner, this approach may also result in long training iterations, and generating unrealistic prediction outputs for the ML algorithms when exposed to the real-world data.

Thus, in several embodiments and aspects of the present disclosure, the input data set to the ML algorithm ensemble may comprise unlabelled data collected from the real-world scenarios e.g. scenarios that have occurred in the surrounding environment of the vehicles 1, 2. The unlabelled input data set 203 provided to the ML algorithm ensemble 100 may be formed based on the information representative of a variety of scenarios occurring in the surrounding environment of the vehicle 1, 2 obtained from the sensor system 320 of the vehicle 1, 2 as elucidated with reference to Fig. 2. The sensor data comprising such information may be recorded in and obtained from the memory unit 12 of the vehicle 1, 2. In several embodiments, the sensor data may be obtained from a memory 15a of the server 15. In some embodiments and examples, the unlabelled data set 203 may at least partly be obtained in real time from the sensor system 320. In some exemplary embodiments, the unlabelled data set 203 may at least partly be obtained in scheduled time intervals e.g. from the memory unit 12 or may be data captured by the sensor system 320 and stored at least partly in the data storage of the server 15.

Reverting to Fig. 1a and more specifically to Fig. 1c, the unlabelled training data set 203 comprises one or more unlabelled training data samples 203a - 203n obtained at least partly from the sensor system 320 of the vehicle 1, 2. The unlabelled data set 203 may be representative of one or more scenarios in the surrounding environment of the vehicle 1, 2. The unlabelled data set 203 is accordingly formed and provided as input data set to the ensemble 100.

The ML algorithm ensemble 100 may be configured to determine the discrepancy 205 in the ensemble prediction output 204 for a particular unlabelled data sample. It should be appreciated that the discrepancy may be determined for one or more particular unlabelled data samples comprised in the unlabelled training data set 203.

The ML Algorithm ensemble 100 may be configured to determine such a discrepancy by comparing, for each of the one or more unlabelled data samples 203a - 203n, the prediction output 201a - 201n of each ML algorithm ML₁-MLₙ comprised in the ensemble 100 with the prediction output 201a - 201n of each of a rest of the ML algorithms comprised in the ensemble 100.

In other words, when the ML algorithms ML₁-MLₙ generate their respective prediction outputs 201a - 201n for a particular unlabelled data sample e.g. sample 203a, all the prediction outputs are compared with one another and surveyed for discrepancies similar to the approach explained with reference to Fig. 1a and Fig. 1b. Similarly, distance measurement techniques and approaches may be utilized for determining the discrepancies. Analogously and as a similar example to the examples of Fig. 1a and Fig. 1b, the ML3 in Fig. 1d may generate a prediction output 201c for the unlabelled input data sample 203a which corresponds to a sporadic and dissimilar output compared to the prediction outputs of the other ML algorithms comprised in the ensemble 100. When this incompatibility 210 for the prediction outputs of one or more of the ML algorithms is identified, discrepancy 205 in the prediction output 204 of the ML algorithm ensemble 100 is determined for the one or more particular unlabelled data samples. In response to the determined discrepancy 205 in the ensemble prediction output 204 for the one or more particular synthetic data samples, e.g., data sample 203a comprised in the unlabelled input data set 203, one or more condition-specific parameters causing the determined discrepancy for that particular unlabelled data sample 203a may be identified 208. The conditions may be any attributes of the unlabelled data samples such as registered irregularities in shape, color, lighting, discontinuities or variations in the contour, profile, or boundaries to name a few.

The unlabelled data sample 203a causing the discrepancy 205 in the prediction outputs of the ML algorithms ML₁-MLₙ may accordingly be tagged 211 as an OOD unlabelled data sample 203a. When the conditions leading to the anomalous prediction output generated by the respective ML algorithm for the OOD unlabelled data sample are explored and determined 208 , a condition-specific synthetic training data set may be generated 209 for these identified conditions. The condition-specific synthetic training data set may comprise one or more condition-specific synthetic data samples representative of the identified one or more condition-specific parameters for that particular OOD unlabelled data sample. Accordingly, a second training data set comprising the generated condition-specific synthetic training data set formed based on that particular unlabelled data sample may be formed 206. In several embodiments, the first training data set may be updated 207 with the formed second training data set.

It should be clear to the skilled person that the second training data set may be formed comprising condition-specific synthetic data samples formed based on several OOD unlabelled data samples creating anomalous prediction outputs. The second training data set may be continuously updated as new OOD unlabelled data samples emerge. In several embodiments, the ML algorithms of the ensemble 100 may be retrained with updated first training data set, which in turn will result in more robust prediction outputs of the ML algorithms to unusual real-world scenarios.

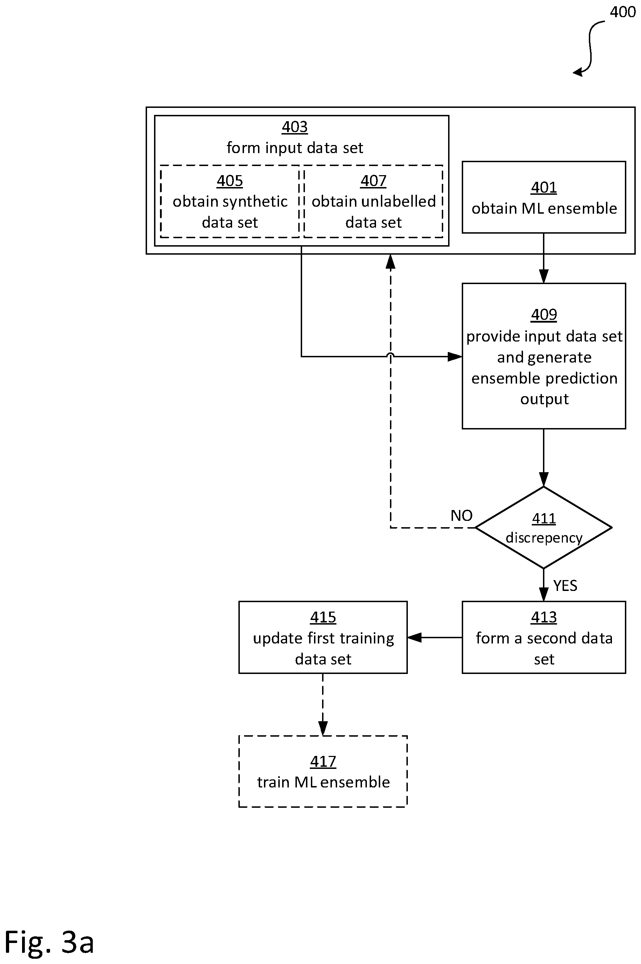

Fig. 3a shows a flowchart of a method **400** according to various aspects and embodiments of the present disclosure and with reference to the technology presented in Fig. 1a. The method comprises obtaining **401** a trained ensemble 100 of machine learning, ML, algorithms, comprising a plurality of ML algorithms ML₁-MLₙ that are trained at least partly based on a first set of training data. The method further comprises forming **403** an input data set for the trained ensemble of ML algorithms. The input data set comprises one or more input data samples 200a - 200n.

In some embodiments and aspects, the input data set is formed by obtaining **405** a synthetic training data set 202. The one or more input data samples 200a - 200n thus correspond to one or more synthetic data samples 202a - 202n.

In some embodiments and aspects, the input data set is formed by obtaining **407** an unlabelled training data set 203. The one or more input data samples 200a - 200n thus correspond to one or more unlabelled data samples 203a - 203n. The method **400** further comprises providing **409** the formed input data set to the trained ensemble of ML algorithms for generating **409,** for each of the one or more input data samples, an ensemble prediction output 204. The ensemble prediction output for each of the one or more input data samples comprises prediction outputs 201a - 201n generated by each of the ML algorithms ML₁-MLₙ comprised in the ensemble of ML algorithms for that sample of the one or more input data samples. In response to a determined discrepancy **411** in the ensemble prediction output for a particular input data sample, the method further comprises forming **413** a second training data set based on that particular input data sample. In several aspects and embodiments, the method **400** further comprises updating **415** the first training data set with the formed second training data set.

In several embodiments and aspects, the discrepancy 205 in the ensemble prediction output for the particular input data sample is determined **411,** when the prediction output generated by at least one of the ML algorithms comprised in the ensemble may be incompatible 210 with the prediction outputs generated by one or more of the other ML algorithms of the ensemble for that particular input data sample. Various distance measures and metrics known in the art may be used for calculation and determination of incompatibility and discrepancy. In several aspects and embodiments for instance, a Euclidian distance or a cosine distance may be calculated to measures the differences between data vectors generated based on the prediction outputs for each ML algorithm.

In several aspects and embodiments, the method **400** may further comprise training **417** the ensemble of ML algorithms by using the updated first set of training data. In some embodiments and aspects, one or more but not all of the ML algorithms comprised in the ensemble 100 may be trained by the updated first set of training data.

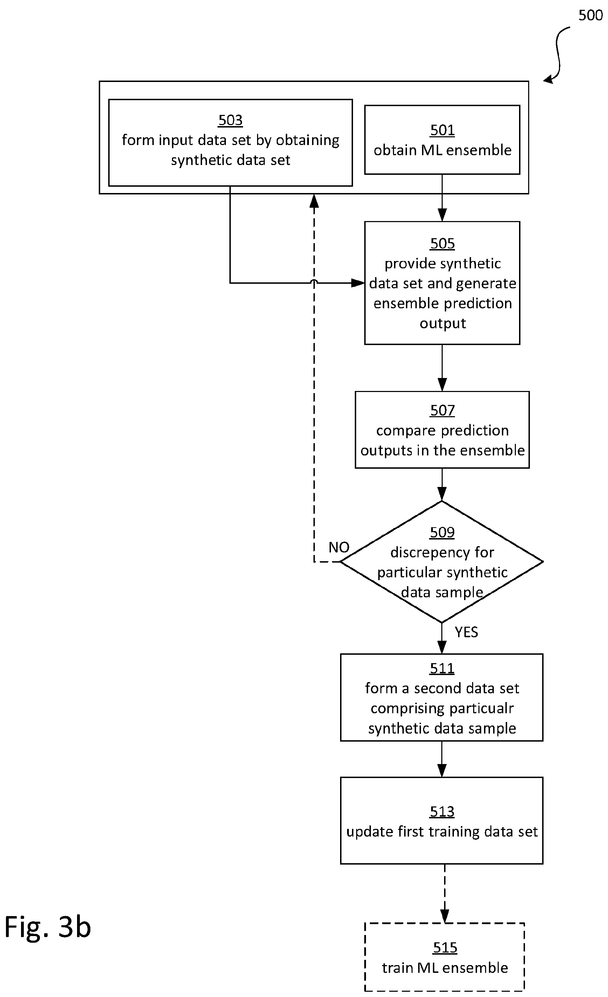

Fig. 3b shows a flowchart of a method **500** according to various aspects and embodiments of the present disclosure and with reference to the technology presented in Figs. 1a-1b.

The method comprises obtaining **501** a trained ensemble 100 of machine learning, ML, algorithms, comprising a plurality of ML algorithms ML₁-MLₙ that are trained at least partly based on a first set of training data. The method further comprises forming **503** an input data set for the trained ensemble of ML algorithms. The input data set comprises one or more input data samples 200a - 200n. The input data set is formed by obtaining **503** a synthetic training data set 202. The one or more input data samples 200a - 200n thus correspond to one or more synthetic data samples 202a - 202n. In several aspects and embodiments, the synthetic training data set is artificially generated for constructing a scenario in a surrounding environment of a vehicle.

The method **500** further comprises providing **505** the formed synthetic data set to the trained ensemble of ML algorithms for generating **505,** for each of the one or more synthetic data samples, an ensemble prediction output 204. The ensemble prediction output for each of the one or more synthetic data samples comprises prediction outputs 201a - 201n generated by each of the ML algorithms ML₁-MLₙ comprised in the ensemble of ML algorithms for that sample of the one or more synthetic data samples.

The method **500** further comprises determining **509** the discrepancy 205 in the ensemble prediction output 204 for a particular synthetic data sample by comparing **507,** for each of the one or more synthetic data samples 202a - 202n, the prediction output 201a - 201n of each ML algorithm of the ensemble 100 with the prediction output of each of a rest of the ML algorithms comprised in the ensemble 100. In several embodiments and aspects, the discrepancy 205 in the ensemble prediction output 204 may be determined for one or more particular synthetic data samples comprised in the synthetic training data set.

In response to the determined discrepancy in the ensemble prediction output for one or more particular synthetic data samples, the method **500** further comprises forming **511** the second training data set comprising that one or more particular synthetic data samples. The method **500** further comprises updating **513** the first training data set with the formed second training data set.

In several embodiments and aspects, the discrepancy 205 in the ensemble prediction output 204 for the particular synthetic data sample is determined **509,** when the prediction output generated by at least one of the ML algorithms comprised in the ensemble may be incompatible 210 with the prediction outputs generated by one or more of the other ML algorithms of the ensemble for that particular input data sample. Various distance measures and metrics known in the art may be used for calculation and determination of incompatibility and discrepancy. In several aspects and embodiments for instance, a Euclidian distance or a cosine distance may be calculated to measures the differences between data vectors generated based on the prediction outputs for each ML algorithm.

In several aspects and embodiments, the method **500** may further comprise training **515** the ensemble 100 of ML algorithms by using the updated first set of training data. In some embodiments and aspects, one or more but not all of the ML algorithms comprised in the ensemble 100 may be trained by the updated first set of training data.

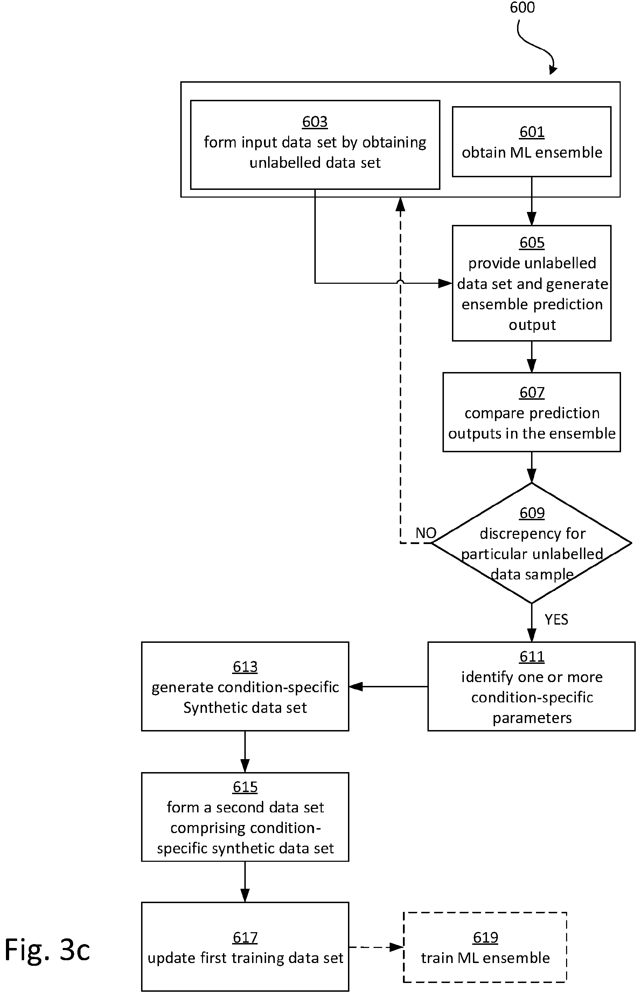

Fig. 3c shows a flowchart of a method **600** according to various aspects and embodiments of the present disclosure and with reference to the technology presented in Figs. 1a-1c.

The method comprises obtaining **601** a trained ensemble 100 of machine learning, ML, algorithms, comprising a plurality of ML algorithms ML₁-MLₙ that are trained at least partly based on a first set of training data. The method further comprises forming **603** an input data set for the trained ensemble of ML algorithms. The input data set comprises one or more input data samples 200a - 200n. The input data set is formed by obtaining **603** an unlabelled training data set 203. The one or more input data samples 200a - 200n thus correspond to one or more unlabelled data samples 203a - 203n. In several aspects and embodiments, the unlabelled training data set comprises information obtained at least partly from a sensor system 320 of a vehicle 1, 2 being a representative of a scenario in a surrounding environment of the vehicle.

The method **600** further comprises providing **605** the formed unlabelled data set to the trained ensemble 100 of ML algorithms for generating **605,** for each of the one or more unlabelled data samples 203a - 203n, an ensemble prediction output 204. The ensemble prediction output for each of the one or more unlabelled data samples comprises prediction outputs 201a - 201n generated by each of the ML algorithms ML₁-MLₙ comprised in the ensemble 100 of ML algorithms for that sample of the one or more unlabelled data samples.

The method **600** further comprises determining **609** the discrepancy 205 in the ensemble prediction output 204 for a particular unlabelled data sample by comparing **607,** for each of the one or more unlabelled data samples 203a - 203n, the prediction output 201a - 201n of each ML algorithm of the ensemble 100 with the prediction output of each of a rest of the ML algorithms comprised in the ensemble 100. In several embodiments and aspects, the discrepancy 205 in the ensemble prediction output 204 may be determined for one or more particular unlabelled data samples comprised in the unlabelled training data set.

In response to the determined discrepancy in the ensemble prediction output for one or more particular unlabelled data samples, the method **600** further comprises identifying **611** one or more condition-specific parameters causing the determined discrepancy for that particular unlabelled data sample. The method **600** further comprises generating **613** a condition-specific synthetic training data set comprising one or more condition-specific synthetic data samples representative of the identified one or more condition-specific parameters for that particular unlabelled data sample. The method further comprises forming **615** the second training data set comprising the generated condition-specific synthetic training data set and updating **617** the first training data set with the formed second training data set.

In several embodiments and aspects, the discrepancy 205 in the ensemble prediction output 204 for the particular synthetic data sample is determined **609,** when the prediction output generated by at least one of the ML algorithms comprised in the ensemble may be incompatible 210 with the prediction outputs generated by one or more of the other ML algorithms of the ensemble for that particular unlabelled data sample. Various distance measures and metrics known in the art may be used for calculation and determination of incompatibility and discrepancy. In several aspects and embodiments for instance, a Euclidian distance or a cosine distance may be calculated to measures the differences between data vectors generated based on the prediction outputs for each ML algorithm.

In several aspects and embodiments, the method **600** may further comprise training **619** the ensemble 100 of ML algorithms by using the updated first set of training data. In some embodiments and aspects, one or more but not all of the ML algorithms comprised in the ensemble 100 may be trained by the updated first set of training data.

The input data set, the synthetic training data set and the unlabelled training data set comprises information representative of a scenario in a surrounding environment of a vehicle. In several aspects and embodiments, the vehicle may comprise an Automated Driving System, ADS. In several aspects and embodiments, the method **400, 500, 600** may be performed by a control system 10 of the vehicle 1 comprising processing circuitry 11 configured for performing the various embodiments and steps of the method **400, 500, 600.** In several aspects and embodiments, the method **400, 500, 600** may be performed by a control system 15b of a server 15 or data center 15 comprising processing circuitry configured for performing the various embodiments and steps of the method **400, 500, 600.**

In several embodiments and aspects, in an instance that a discrepancy 205 is not determined in the ensemble prediction output 204 for one or more particular input data samples, the method **400, 500, 600** may revert to obtaining input data set or to any one of the method steps accordingly.

It should be noted that all the embodiments, elements, features, examples and advantages described earlier with reference to the control system 10 of the vehicle 1, 2, or the processing circuitry 11 of the control system 10, or control system 15b of the server 15, and Figs. 1a-1d and Fig. 2, analogously and equally apply to various embodiments of the methods **400, 500, 600** described herein with reference to Figs. 3a-3c.

Executable instructions for performing these functions and embodiments of the method **400, 500, 600** are, optionally, included in a non-transitory computer-readable storage medium or other computer program product configured for execution by one or more processors.

Fig. 4 is a schematic illustration of an ADS-equipped vehicle 1 comprising a control system 10, which may also be referred to as the control apparatus or device 10 or simply the apparatus 10. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the control system 10 may form a part of the ADS 310, i.e. the control system 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 4. Moreover, the vehicle 1 may comprise further elements than those shown in Fig. 4. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 4 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 328. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320. The ADS 310 may also comprise other modules such as a path planning module 316.

According to an exemplary embodiment, there is provided a non-transitory computer-readable storage medium storing one or more programs configured to be executed by one or more processors of a vehicle control system, the one or more programs comprising instructions for performing the method according to any one of the abovediscussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

As previously mentioned, it should be appreciated that parts of the described solution may be implemented either in the vehicle 1, in a system located external the vehicle 1, or in a combination of internal and external the vehicle; for instance in a server 15 in communication with the vehicle, a so called cloud solution. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention.

## Claims

1. A computer-implemented method (400, 500, 600) comprising:
obtaining (401, 501, 601) a trained ensemble of machine learning, ML, models, comprising a plurality of ML models that are trained to solve an object classification task, an object detection task, or a segmentation task at least partly based on a first training data set,
wherein each of the ML models is configured to process as input an image and to output for the image a prediction result,
wherein the prediction result indicates a class from among a plurality of classes if the task is an object classification task,
wherein the prediction result indicates the position of an object that is present in the image if the task is an object detection task,
wherein the prediction result segments the image if the task is a segmentation task;
forming (403) an input data set for the trained ensemble of ML models by obtaining (405, 503) a synthetic training data set or by obtaining (407, 603) an unlabelled training data set, the input data set comprising one or more input data samples comprising information representative of one or more scenarios in a surrounding environment of a vehicle;
providing (409, 505, 605) the formed input data set to the trained ensemble of ML models for generating, for each of the one or more input data samples, an ensemble prediction output;
wherein the ensemble prediction output for each of the one or more input data samples comprises prediction outputs generated by each of the ML models comprised in the ensemble of ML models for that sample of the one or more input data samples;
in response to a determined discrepancy in the ensemble prediction output for a particular input data sample:
forming (413, 511, 615) a second training data set based on that particular input data sample; and
updating (415, 513, 617) the first training data set with the formed second training data set for training the ensemble of ML models to solve the task by using the updated first training data set.

2. The method (400, 500) according to claim 1, wherein for the input data set formed based on the obtained (405, 503) synthetic training data set:
the one or more input data samples correspond to one or more synthetic data samples;
wherein the synthetic training data set is artificially generated for constructing a scenario in a surrounding environment of a vehicle, wherein the method further comprises:
determining the discrepancy in the ensemble prediction output for a particular synthetic data sample by comparing (507), for each of the one or more synthetic data samples, the prediction output of each ML model of the ensemble with the prediction output of each of a rest of the ML models comprised in the ensemble; and
in response to the determined discrepancy in the ensemble prediction output for that particular synthetic data sample:
forming (413, 511) the second training data set comprising that particular synthetic data sample; and
updating (415, 513) the first training data set with the formed second training data set for training the ensemble of ML models to solve the task by using the updated first training data set.

3. The method (400, 600) according to claim 1, wherein for the input data set formed based on the obtained (407, 603) unlabelled training data set:
the one or more input data samples correspond to one or more unlabelled data samples;
wherein the unlabelled training data set comprises information obtained at least partly from a sensor system of a vehicle and being a representative of a scenario in a surrounding environment of the vehicle; wherein the method further comprises:
determining the discrepancy in the ensemble prediction output for a particular unlabelled data sample by comparing (607), for each of the one or more unlabelled data samples, the prediction output of each ML model of the ensemble with the prediction output of each of a rest of the other ML models comprised in the ensemble; and
in response to the determined discrepancy in the ensemble prediction output for that particular unlabelled data sample:
identifying (611) one or more condition-specific parameters causing the determined discrepancy for that particular unlabelled data sample;
generating (613) a condition-specific synthetic training data set comprising one or more condition-specific synthetic data samples representative of the identified one or more condition-specific parameters for that particular unlabelled data sample;
forming (413, 615) the second training data set comprising the generated condition-specific synthetic training data set; and
updating (615, 617) the first training data set with the formed second training data set for training the ensemble of ML models to solve the task by using the updated first training data set.

4. The method (400, 500, 600) according to any one of claims 1 - 3, wherein the discrepancy in the ensemble prediction output for the particular input data sample is determined when the prediction output generated by at least one of the ML models comprised in the ensemble is dissimilar to the prediction outputs generated by one or more of the other ML models of the ensemble for that particular input data sample.

5. The method (400, 500, 600) according to any one of claims 1 - 4, wherein the method further comprises:
training (417, 515, 619) the ensemble of ML models by using the updated (415, 513, 617) first set of training data.

6. The method (400, 500, 600) according to any one of the preceding claims, wherein the vehicle comprises an Automated Driving System, ADS.

7. The method (400, 500, 600) according to any one of the preceding claims, wherein the method is performed by a processing circuitry of a vehicle.

8. A computer-readable storage medium comprising instructions which, when executed by one or more processors of an in-vehicle computer, causes the in-vehicle computer to carry out the method (400, 500, 600) according to any one of claims 1- 6.

9. A computer program product comprising instructions which, when the program is executed by one or more processors of an in-vehicle computer, causes the in-vehicle computer to carry out the method (400, 500, 600) according to any one of claims 1- 6.

10. A system (10, 15) comprising processing circuitry (11, 15b) configured to:
obtain a trained ensemble (100) of machine learning, ML, models, comprising a plurality of ML models (ML₁-MLₙ) that are trained to solve an object classification task, an object detection task, or a segmentation task at least partly based on a first set of training data,
wherein each of the ML models is configured to process as input an image and to output for the image a prediction result,
wherein the prediction result indicates a class from among a plurality of classes if the task is an object classification task,
wherein the prediction result indicates the position of an object that is present in the image if the task is an object detection task,
wherein the prediction result segments the image if the task is a segmentation task;
form an input data set (200) for the trained ensemble of ML models by obtaining a synthetic training data set (202) or by obtaining an unlabelled training data set (203), the input data set comprising one or more input data samples (200a-200n, 202a-202n, 203a-203n) comprising information representative of one or more scenarios in a surrounding environment of a vehicle;
provide the formed input data set to the trained ensemble (100) of ML models for generating, for each of the one or more input data samples, an ensemble prediction output (204);
wherein the ensemble prediction output (204) for each of the one or more input data samples comprises prediction outputs generated by each of the ML models (ML₁-MLₙ) comprised in the ensemble of ML models for that sample of the one or more input data samples;
in response to a determined discrepancy (205) in the ensemble prediction output (204) for a particular input data sample, the processing circuitry (11, 15b) is further configured to:
form a second training data set based on that particular input data sample; and
update the first training data set with the formed second training data set for training the ensemble of ML models to solve the task by using the updated first training data set.

11. The system (10, 15) according to claim 10, wherein for the input data set (200) formed based on the obtained synthetic training data set (202):
the one or more input data samples (200a-200n) correspond to one or more synthetic data samples (202a-202n);
wherein the synthetic training data set (202) being artificially generated for constructing a scenario in a surrounding environment of a vehicle (1), and wherein the processing circuitry (11, 15b) is further configured to:
determine the discrepancy in the ensemble prediction output (204) for a particular synthetic data sample by comparing, for each of the one or more synthetic data samples (202a-202n), the prediction output (201a-201n) of each ML model of the ensemble with the prediction output of each of a rest of the ML models comprised in the ensemble; and
in response to the determined discrepancy (205) in the ensemble prediction output (204) for that particular synthetic data sample, the processing circuitry (11, 15b) is further configured to:
form the second training data set comprising that particular synthetic data sample; and
update the first training data set with the formed second training data set for training the ensemble of ML models to solve the task by using the updated first training data set.

12. The system (10- 15) according to claim 10, wherein for the input data set (200) formed based on the obtained unlabelled training data set (203):
the one or more input data samples (200a-200n) correspond to one or more unlabelled data samples (203a-203n);
wherein the unlabelled training data set (203) comprises information obtained at least partly from a sensor system of a vehicle and being a representative of a scenario in a surrounding environment of the vehicle (1), and wherein the processing circuitry (11, 15b) is further configured to:
determine the discrepancy in the ensemble prediction output (204) for a particular unlabelled data sample by comparing, for each of the one or more unlabelled data samples (203a-203n), the prediction output (201a-201n) of each ML model of the ensemble with the prediction output of each of a rest of the other ML models comprised in the ensemble; and
in response to the determined discrepancy (205) in the ensemble prediction output (204) for that particular unlabelled data sample, the processing circuitry (11, 15b) is further configured to:
identify one or more condition-specific parameters causing the determined discrepancy for that particular unlabelled data sample;
generate a condition-specific synthetic training data set comprising one or more condition-specific synthetic data samples representative of the identified one or more condition-specific parameters for that particular unlabelled data sample;
form the second training data set comprising the generated condition-specific synthetic training data set; and
update the first training data set with the formed second training data set for training the ensemble of ML models to solve the task by using the updated first training data set.

13. The system (10, 15) according to any one of claims 10 - 12, wherein the processing circuitry (11, 15b) is configured to determine the discrepancy in the ensemble prediction output (204) for the particular input data sample when the prediction output (201a-201n) generated by at least one of the ML models (ML₁-MLₙ) comprised in the ensemble (100) is dissimilar to (210) the prediction outputs (201a-201n) generated by one or more of the other ML models of the ensemble for that particular input data sample.

14. The system (10, 15) according to any one of claims 10 - 13, wherein the processing circuitry (11, 15b) is further configured to:
train the ensemble of ML models by using the updated first set of training data.

15. A vehicle (1) comprising:
one or more vehicle-mounted sensors (324) configured to monitor a surrounding environment of the vehicle (1);
a localization system (322) configured to monitor a geographical position of the vehicle; and
a system (10, 15) according to any one of claims 10 - 14.

## Patentansprüche

1. Computerimplementiertes Verfahren (400, 500, 600), umfassend:
Erlangen (401, 501, 601) eines trainierten Ensembles von Modellen für maschinelles Lernen, ML-Modellen, umfassend eine Vielzahl von ML-Modellen, die trainiert ist, eine Objektklassifikationsaufgabe, eine Objektdetektionsaufgabe oder eine Segmentierungsaufgabe mindestens teilweise basierend auf einem ersten Trainingsdatensatz zu lösen,
wobei jedes der ML-Modelle dazu konfiguriert ist, als Eingabe ein Bild zu verarbeiten und für das Bild ein Vorhersageergebnis auszugeben,
wobei das Vorhersageergebnis eine Klasse aus einer Vielzahl von Klassen anzeigt, wenn die Aufgabe eine Objektklassifikationsaufgabe ist,
wobei das Vorhersageergebnis die Position eines Objekts, das in dem Bild vorhanden ist, anzeigt, wenn die Aufgabe eine Objektdetektionsaufgabe ist,
wobei das Vorhersageergebnis das Bild segmentiert, wenn die Aufgabe eine Segmentierungsaufgabe ist;
Bilden (403) eines Eingabedatensatzes für das trainierte Ensemble von ML-Modellen durch Erlangen (405, 503) eines synthetischen Trainingsdatensatzes oder durch Erlangen (407, 603) eines unmarkierten Trainingsdatensatzes, wobei der Eingabedatensatz eine oder mehrere Eingabedatenproben umfasst, die Informationen umfassen, die ein oder mehrere Szenarios in einer umliegenden Umgebung eines Fahrzeugs darstellen;
Bereitstellen (409, 505, 605) des gebildeten Eingabedatensatzes an das trainierte Ensemble von ML-Modellen zum Erzeugen, für jede der einen oder der mehreren Eingabedatenproben, einer Ensemblevorhersageausgabe;
wobei die Ensemblevorhersageausgabe für jede der einen oder der mehreren Eingabedatenproben Vorhersageausgaben umfasst, die durch jedes der ML-Modelle, die in dem Ensemble von ML-Modellen für diese Probe der einen oder der mehreren Eingabedatenproben umfasst sind, erzeugt werden;
als Reaktion auf eine bestimmte Diskrepanz in der Ensemblevorhersageausgabe für eine konkrete Eingabedatenprobe:
Bilden (413, 511, 615) eines zweiten Trainingsdatensatzes basierend auf dieser konkreten Eingabedatenprobe; und
Aktualisieren (415, 513, 617) des ersten Trainingsdatensatzes mit dem gebildeten zweiten Trainingsdatensatz zum Trainieren des Ensembles von ML-Modellen, die Aufgabe unter Verwendung des aktualisierten ersten Trainingsdatensatzes zu lösen.

2. Verfahren (400, 500) nach Anspruch 1, wobei, für den Eingabedatensatz, der basierend auf dem erlangten (405, 503) synthetischen Trainingsdatensatz gebildet ist:
die eine oder die mehreren Eingabedatenproben einer oder mehreren synthetischen Datenproben entsprechen;
wobei der synthetische Trainingsdatensatz künstlich zum Konstruieren eines Szenarios in einer umliegenden Umgebung eines Fahrzeugs erzeugt ist, wobei das Verfahren ferner Folgendes umfasst:
Bestimmen der Diskrepanz in der Ensemblevorhersageausgabe für eine konkrete synthetische Datenprobe durch Vergleichen (507), für jede der einen oder der mehreren synthetischen Datenproben, der Vorhersageausgabe jedes ML-Modells des Ensembles mit der Vorhersageausgabe jedes eines Rests der ML-Modelle, die in dem Ensemble umfasst sind; und
als Reaktion auf die bestimmte Diskrepanz in der Ensemblevorhersageausgabe für diese konkrete synthetische Datenprobe:
Bilden (413, 511) des zweiten Trainingsdatensatzes, der diese konkrete synthetische Datenprobe umfasst; und
Aktualisieren (415, 513) des ersten Trainingsdatensatzes mit dem gebildeten zweiten Trainingsdatensatz zum Trainieren des Ensembles von ML-Modellen, die Aufgabe unter Verwendung des aktualisierten ersten Trainingsdatensatzes zu lösen.

3. Verfahren (400, 600) nach Anspruch 1, wobei, für den Eingabedatensatz, der basierend auf dem erlangten (407, 603) unmarkierten Trainingsdatensatz gebildet ist:
die eine oder die mehreren Eingabedatenproben einer oder mehreren unmarkierten Datenproben entsprechen;
wobei der unmarkierte Trainingsdatensatz Informationen umfasst, die mindestens teilweise von einem Sensorsystem eines Fahrzeugs erlangt wurden und ein Szenario in einer umliegenden Umgebung des Fahrzeugs darstellen; wobei das Verfahren ferner Folgendes umfasst:
Bestimmen der Diskrepanz in der Ensemblevorhersageausgabe für eine konkrete unmarkierte Datenprobe durch Vergleichen (607), für jede der einen oder der mehreren unmarkierten Datenproben, der Vorhersageausgabe jedes ML-Modells des Ensembles mit der Vorhersageausgabe jedes eines Rests der anderen ML-Modelle, die in dem Ensemble umfasst sind; und
als Reaktion auf die bestimmte Diskrepanz in der Ensemblevorhersageausgabe für diese konkrete unmarkierte Datenprobe:
Identifizieren (611) eines oder mehrerer bedingungsspezifischer Parameter, welche die bestimmte Diskrepanz für diese konkrete unmarkierte Datenprobe verursachen;
Erzeugen (613) eines bedingungsspezifischen synthetischen Trainingsdatensatzes, der eine oder mehrere bedingungsspezifische synthetische Datenproben umfasst, welche die identifizierten einen oder mehreren bedingungsspezifischen Parameter für diese konkrete unmarkierte Datenprobe darstellen;
Bilden (413, 615) des zweiten Trainingsdatensatzes, der den erzeugten bedingungsspezifischen synthetischen Trainingsdatensatz umfasst; und
Aktualisieren (615, 617) des ersten Trainingsdatensatzes mit dem gebildeten zweiten Trainingsdatensatz zum Trainieren des Ensembles von ML-Modellen, die Aufgabe unter Verwendung des aktualisierten ersten Trainingsdatensatzes zu lösen.

4. Verfahren (400, 500, 600) nach einem der Ansprüche 1-3, wobei die Diskrepanz in der Ensemblevorhersageausgabe für die konkrete Eingabedatenprobe bestimmt wird, wenn sich die Vorhersageausgabe, die durch mindestens eines der ML-Modelle, die in dem Ensemble umfasst sind, erzeugt wird, von den Vorhersageausgaben, die durch ein oder mehrere der anderen ML-Modelle des Ensembles für diese konkrete Eingabedatenprobe erzeugt werden, unterscheidet.

5. Verfahren (400, 500, 600) nach einem der Ansprüche 1-4, wobei das Verfahren ferner Folgendes umfasst:
Trainieren (417, 515, 619) des Ensembles von ML-Modellen unter Verwendung des aktualisierten (415, 513, 617) ersten Satzes von Trainingsdaten.

6. Verfahren (400, 500, 600) nach einem der vorhergehenden Ansprüche, wobei das Fahrzeug ein automatisiertes Fahrsystem, ADS, umfasst.

7. Verfahren (400, 500, 600) nach einem der vorhergehenden Ansprüche, wobei das Verfahren durch eine Verarbeitungsschaltung eines Fahrzeugs durchgeführt wird.

8. Computerlesbares Speichermedium, umfassend Anweisungen, die, wenn sie durch einen oder mehrere Prozessoren eines fahrzeuginternen Computers ausgeführt werden, den fahrzeuginternen Computer dazu veranlassen, das Verfahren (400, 500, 600) nach einem der Ansprüche 1-6 umzusetzen.

9. Computerprogrammprodukt, umfassend Anweisungen, die, wenn das Programm durch einen oder mehrere Prozessoren eines fahrzeuginternen Computers ausgeführt wird, den fahrzeuginternen Computer dazu veranlassen, das Verfahren (400, 500, 600) nach einem der Ansprüche 1-6 umzusetzen.

10. System (10, 15), umfassend Verarbeitungsschaltung (11, 15b), die zu Folgendem konfiguriert ist:
Erlangen eines trainierten Ensembles (100) von Modellen für maschinelles Lernen, ML-Modellen, umfassend eine Vielzahl von ML-Modellen (ML₁-MLₙ), die trainiert ist, eine Objektklassifikationsaufgabe, eine Objektdetektionsaufgabe oder eine Segmentierungsaufgabe mindestens teilweise basierend auf einem ersten Satz von Trainingsdaten zu lösen,
wobei jedes der ML-Modelle dazu konfiguriert ist, als Eingabe ein Bild zu verarbeiten und für das Bild ein Vorhersageergebnis auszugeben,
wobei das Vorhersageergebnis eine Klasse aus einer Vielzahl von Klassen anzeigt, wenn die Aufgabe eine Objektklassifikationsaufgabe ist,
wobei das Vorhersageergebnis die Position eines Objekts, das in dem Bild vorhanden ist, anzeigt, wenn die Aufgabe eine Objektdetektionsaufgabe ist,
wobei das Vorhersageergebnis das Bild segmentiert, wenn die Aufgabe eine Segmentierungsaufgabe ist;
Bilden eines Eingabedatensatzes (200) für das trainierte Ensemble von ML-Modellen durch Erlangen eines synthetischen Trainingsdatensatzes (202) oder durch Erlangen eines unmarkierten Trainingsdatensatzes (203), wobei der Eingabedatensatz eine oder mehrere Eingabedatenproben (200a-200n, 202a-202n, 203a-203n) umfasst, die Informationen umfassen, die ein oder mehrere Szenarios in einer umliegenden Umgebung eines Fahrzeugs darstellen;
Bereitstellen des gebildeten Eingabedatensatzes an das trainierte Ensemble (100) von ML-Modellen zum Erzeugen, für jede der einen oder der mehreren Eingabedatenproben, einer Ensemblevorhersageausgabe (204);
wobei die Ensemblevorhersageausgabe (204) für jede der einen oder der mehreren Eingabedatenproben Vorhersageausgaben umfasst, die durch jedes der ML-Modelle (ML₁-MLₙ), die in dem Ensemble von ML-Modellen für diese Probe der einen oder der mehreren Eingabedatenproben umfasst sind, erzeugt werden;
wobei, als Reaktion auf eine bestimmte Diskrepanz (205) in der Ensemblevorhersageausgabe (204) für eine konkrete Eingabedatenprobe, die Verarbeitungsschaltung (11, 15b) ferner zu Folgendem konfiguriert ist:
Bilden eines zweiten Trainingsdatensatzes basierend auf dieser konkreten Eingabedatenprobe; und
Aktualisieren des ersten Trainingsdatensatzes mit dem gebildeten zweiten Trainingsdatensatz zum Trainieren des Ensembles von ML-Modellen, die Aufgabe unter Verwendung des aktualisierten ersten Trainingsdatensatzes zu lösen.

11. System (10, 15) nach Anspruch 10, wobei, für den Eingabedatensatz (200), der basierend auf dem erlangten synthetischen Trainingsdatensatz (202) gebildet ist:
die eine oder die mehreren Eingabedatenproben (200a-200n) einer oder mehreren synthetischen Datenproben (202a-202n) entsprechen;
wobei der synthetische Trainingsdatensatz (202) künstlich zum Konstruieren eines Szenarios in einer umliegenden Umgebung eines Fahrzeugs (1) erzeugt wird und wobei die Verarbeitungsschaltung (11, 15b) ferner zu Folgendem konfiguriert ist:
Bestimmen der Diskrepanz in der Ensemblevorhersageausgabe (204) für eine konkrete synthetische Datenprobe durch Vergleichen, für jede der einen oder der mehreren synthetischen Datenproben (202a-202n), der Vorhersageausgabe (201a-201n) jedes ML-Modells des Ensembles mit der Vorhersageausgabe jedes eines Rests der ML-Modelle, die in dem Ensemble umfasst sind; und
wobei, als Reaktion auf die bestimmte Diskrepanz (205) in der Ensemblevorhersageausgabe (204) für diese konkrete synthetische Datenprobe, die Verarbeitungsschaltung (11, 15b) ferner zu Folgendem konfiguriert ist:
Bilden des zweiten Trainingsdatensatzes, der diese konkrete synthetische Datenprobe umfasst; und
Aktualisieren des ersten Trainingsdatensatzes mit dem gebildeten zweiten Trainingsdatensatz zum Trainieren des Ensembles von ML-Modellen, die Aufgabe unter Verwendung des aktualisierten ersten Trainingsdatensatzes zu lösen.

12. System (10-15) nach Anspruch 10, wobei, für den Eingabedatensatz (200), der basierend auf dem erlangten unmarkierten Trainingsdatensatz (203) gebildet ist:
die eine oder die mehreren Eingabedatenproben (200a-200n) einer oder mehreren unmarkierten Datenproben (203a-203n) entsprechen;
wobei der unmarkierte Trainingsdatensatz (203) Informationen umfasst, die mindestens teilweise von einem Sensorsystem eines Fahrzeugs erlangt wurden und ein Szenario in einer umliegenden Umgebung des Fahrzeugs (1) darstellen und wobei die Verarbeitungsschaltung (11, 15b) ferner zu Folgendem konfiguriert ist:
Bestimmen der Diskrepanz in der Ensemblevorhersageausgabe (204) für eine konkrete unmarkierte Datenprobe durch Vergleichen, für jede der einen oder der mehreren unmarkierten Datenproben (203a-203n), der Vorhersageausgabe (201a-201n) jedes ML-Modells des Ensembles mit der Vorhersageausgabe jedes eines Rests der anderen ML-Modelle, die in dem Ensemble umfasst sind; und
wobei, als Reaktion auf die bestimmte Diskrepanz (205) in der Ensemblevorhersageausgabe (204) für diese konkrete unmarkierte Datenprobe, die Verarbeitungsschaltung (11, 15b) ferner zu Folgendem konfiguriert ist:
Identifizieren eines oder mehrerer bedingungsspezifischer Parameter, welche die bestimmte Diskrepanz für diese konkrete unmarkierte Datenprobe verursachen;
Erzeugen eines bedingungsspezifischen synthetischen Trainingsdatensatzes, der eine oder mehrere bedingungsspezifische synthetische Datenproben umfasst, welche die identifizierten einen oder mehreren bedingungsspezifischen Parameter für diese konkrete unmarkierte Datenprobe darstellen;
Bilden des zweiten Trainingsdatensatzes, der den erzeugten bedingungsspezifischen synthetischen Trainingsdatensatz umfasst; und
Aktualisieren des ersten Trainingsdatensatzes mit dem gebildeten zweiten Trainingsdatensatz zum Trainieren des Ensembles von ML-Modellen, die Aufgabe unter Verwendung des aktualisierten ersten Trainingsdatensatzes zu lösen.

13. System (10, 15) nach einem der Ansprüche 10-12, wobei die Verarbeitungsschaltung (11, 15b) dazu konfiguriert ist, die Diskrepanz in der Ensemblevorhersageausgabe (204) für die konkrete Eingabedatenprobe zu bestimmen, wenn sich die Vorhersageausgabe (201a-201n), die durch mindestens eines der ML-Modelle (ML₁-MLₙ), die in dem Ensemble (100) umfasst sind, erzeugt wird, von den Vorhersageausgaben (201a-201n), die durch ein oder mehrere der anderen ML-Modelle des Ensembles für diese konkrete Eingabedatenprobe erzeugt werden, unterscheidet (210).

14. System (10, 15) nach einem der Ansprüche 10-13, wobei die Verarbeitungsschaltung (11, 15b) ferner zu Folgendem konfiguriert ist:
Trainieren des Ensembles von ML-Modellen unter Verwendung des aktualisierten ersten Satzes von Trainingsdaten.

15. Fahrzeug (1), umfassend:
einen oder mehrere am Fahrzeug montierte Sensoren (324), die dazu konfiguriert sind, eine umliegende Umgebung des Fahrzeugs (1) zu überwachen;
ein Lokalisierungssystem (322), das dazu konfiguriert ist, eine geografische Position des Fahrzeugs zu überwachen; und
ein System (10, 15) nach einem der Ansprüche 10-14.

## Revendications

1. Procédé mis en œuvre par ordinateur (400, 500, 600) comprenant les étapes consistant à :
obtenir (401, 501, 601) un ensemble entraîné de modèles d'apprentissage machine, ML, comprenant une pluralité de modèles ML qui sont entraînés pour résoudre une tâche de classification d'objet, une tâche de détection d'objet ou une tâche de segmentation au moins partiellement sur la base d'un premier ensemble de données d'apprentissage,
dans lequel chacun des modèles ML est configuré pour traiter en tant qu'entrée une image et pour délivrer en sortie pour l'image un résultat de prédiction,
dans lequel le résultat de prédiction indique une classe parmi une pluralité de classes si la tâche est une tâche de classification d'objet,
dans lequel le résultat de prédiction indique la position d'un objet qui est présent dans l'image si la tâche est une tâche de détection d'objet,
dans lequel le résultat de prédiction segmente l'image si la tâche est une tâche de segmentation ;
former (403) un ensemble de données d'entrée pour l'ensemble entraîné de modèles ML par l'obtention (405, 503) d'un ensemble de données d'apprentissage synthétiques ou par l'obtention (407, 603) d'un ensemble de données d'apprentissage non étiquetées, l'ensemble de données d'entrée comprenant au moins un échantillon de données d'entrée comprenant des informations représentatives d'au moins un scénario dans un environnement proche d'un véhicule ;
fournir (409, 505, 605) l'ensemble de données d'entrée formé à l'ensemble entraîné de modèles ML pour générer, pour chacun dudit au moins un échantillon de données d'entrée, une sortie de prédiction d'ensemble ;
dans lequel la sortie de prédiction d'ensemble pour chacun dudit au moins un échantillon de données d'entrée comprend des sorties de prédiction générées par chacun des modèles ML compris dans l'ensemble de modèles ML pour cet échantillon dudit au moins un échantillon de données d'entrée ;
en réponse à une divergence déterminée dans la sortie de prédiction d'ensemble pour un échantillon de données d'entrée particulier :
former (413, 511, 615) un second ensemble de données d'apprentissage sur la base de cet échantillon de données d'entrée particulier ; et
mettre à jour (415, 513, 617) le premier ensemble de données d'apprentissage avec le second ensemble de données d'apprentissage formé pour l'entraînement de l'ensemble de modèles ML afin de résoudre la tâche en utilisant le premier ensemble de données d'apprentissage mis à jour.

2. Procédé (400, 500) selon la revendication 1, dans lequel, pour l'ensemble de données d'entrée formé sur la base de l'ensemble de données d'apprentissage synthétiques obtenu (405, 503) :
ledit au moins un échantillon de données d'entrée correspond à au moins un échantillon de données synthétiques ;
dans lequel l'ensemble de données d'apprentissage synthétiques est généré artificiellement pour construire un scénario dans un environnement proche d'un véhicule, dans lequel le procédé comprend en outre les étapes consistant à :
déterminer la divergence dans la sortie de prédiction d'ensemble pour un échantillon de données synthétiques particulier par la comparaison (507), pour chacun dudit au moins un échantillon de données synthétiques, de la sortie de prédiction de chaque modèle ML de l'ensemble avec la sortie de prédiction de chacun des modèles ML restants compris dans l'ensemble ; et
en réponse à la divergence déterminée dans la sortie de prédiction d'ensemble pour cet échantillon de données synthétiques particulier :
former (413, 511) le second ensemble de données d'apprentissage comprenant cet échantillon de données synthétiques particulier ; et
mettre à jour (415, 513) le premier ensemble de données d'apprentissage avec le second ensemble de données d'apprentissage formé pour l'entraînement de l'ensemble de modèles ML afin de résoudre la tâche en utilisant le premier ensemble de données d'apprentissage mis à jour.

3. Procédé (400, 600) selon la revendication 1, dans lequel, pour l'ensemble de données d'entrée formé sur la base de l'ensemble de données d'apprentissage non étiquetées obtenu (407, 603) :
ledit au moins un échantillon de données d'entrée correspond à au moins un échantillon de données non étiquetées ;
dans lequel l'ensemble de données d'apprentissage non étiquetées comprend des informations obtenues au moins partiellement à partir d'un système de capteurs d'un véhicule et étant représentatives d'un scénario dans un environnement proche du véhicule ; dans lequel le procédé comprend en outre les étapes consistant à :
déterminer la divergence dans la sortie de prédiction d'ensemble pour un échantillon de données non étiquetées particulier par la comparaison (607), pour chacun dudit au moins un échantillon de données non étiquetées, de la sortie de prédiction de chaque modèle ML de l'ensemble avec la sortie de prédiction de chacun des autres modèles ML restants compris dans l'ensemble ; et
en réponse à la divergence déterminée dans la sortie de prédiction d'ensemble pour cet échantillon de données non étiquetées particulier :
identifier (611) au moins un paramètre spécifique à une condition provoquant la divergence déterminée pour cet échantillon de données non étiquetées particulier ;
générer (613) un ensemble de données d'apprentissage synthétiques spécifiques à une condition comprenant au moins un échantillon de données synthétiques spécifiques à une condition représentatif dudit au moins un paramètre spécifique à une condition identifié pour cet échantillon de données non étiquetées particulier ;
former (413, 615) le second ensemble de données d'apprentissage comprenant l'ensemble de données d'apprentissage synthétiques spécifiques à une condition généré ; et
mettre à jour (615, 617) le premier ensemble de données d'apprentissage avec le second ensemble de données d'apprentissage formé pour l'entraînement de l'ensemble de modèles ML afin de résoudre la tâche en utilisant le premier ensemble de données d'apprentissage mis à jour.

4. Procédé (400, 500, 600) selon l'une quelconque des revendications 1 à 3, dans lequel la divergence dans la sortie de prédiction d'ensemble pour l'échantillon de données d'entrée particulier est déterminée lorsque la sortie de prédiction générée par au moins un des modèles ML compris dans l'ensemble est différente des sorties de prédiction générées par au moins un des autres modèles ML de l'ensemble pour cet échantillon de données d'entrée particulier.

5. Procédé (400, 500, 600) selon l'une quelconque des revendications 1 à 4, dans lequel le procédé comprend en outre l'étape consistant à :
entraîner (417, 515, 619) l'ensemble de modèles ML en utilisant le premier ensemble de données d'apprentissage mis à jour (415, 513, 617).

6. Procédé (400, 500, 600) selon l'une quelconque des revendications précédentes, dans lequel le véhicule comprend un système de conduite automatisée, ADS.

7. Procédé (400, 500, 600) selon l'une quelconque des revendications précédentes, dans lequel le procédé est exécuté par un circuit de traitement d'un véhicule.

8. Support de stockage lisible par ordinateur comprenant des instructions qui, lorsqu'elles sont exécutées par au moins un processeur d'un ordinateur embarqué de véhicule, amènent l'ordinateur embarqué de véhicule à exécuter le procédé (400, 500, 600) selon l'une quelconque des revendications 1 à 6.

9. Produit programme d'ordinateur comprenant des instructions qui, lorsque le programme est exécuté par au moins un processeur d'un ordinateur embarqué de véhicule, amènent l'ordinateur embarqué de véhicule à exécuter le procédé (400, 500, 600) selon l'une quelconque des revendications 1 à 6.

10. Système (10, 15) comprenant un circuit de traitement (11, 15b) configuré pour :
obtenir un ensemble entraîné (100) de modèles d'apprentissage machine, ML, comprenant une pluralité de modèles ML (ML₁-MLₙ) qui sont entraînés pour résoudre une tâche de classification d'objet, une tâche de détection d'objet ou une tâche de segmentation au moins partiellement sur la base d'un premier ensemble de données d'apprentissage,
dans lequel chacun des modèles ML est configuré pour traiter en tant qu'entrée une image et pour délivrer en sortie pour l'image un résultat de prédiction,
dans lequel le résultat de prédiction indique une classe parmi une pluralité de classes si la tâche est une tâche de classification d'objet,
dans lequel le résultat de prédiction indique la position d'un objet qui est présent dans l'image si la tâche est une tâche de détection d'objet,
dans lequel le résultat de prédiction segmente l'image si la tâche est une tâche de segmentation ;
former un ensemble de données d'entrée (200) pour l'ensemble entraîné de modèles ML par l'obtention d'un ensemble de données d'apprentissage synthétiques (202) ou par l'obtention d'un ensemble de données d'apprentissage non étiquetées (203), l'ensemble de données d'entrée comprenant au moins un échantillon de données d'entrée (200a-200n, 202a-202n, 203a-203n) comprenant des informations représentatives d'au moins un scénario dans un environnement proche d'un véhicule ;
fournir l'ensemble de données d'entrée formé à l'ensemble entraîné (100) de modèles ML pour générer, pour chacun dudit au moins un échantillon de données d'entrée, une sortie de prédiction d'ensemble (204) ;
dans lequel la sortie de prédiction d'ensemble (204) pour chacun dudit au moins un échantillon de données d'entrée comprend des sorties de prédiction générées par chacun des modèles ML (ML₁-MLₙ) compris dans l'ensemble de modèles ML pour cet échantillon dudit au moins un échantillon de données d'entrée ;
en réponse à une divergence (205) déterminée dans la sortie de prédiction d'ensemble (204) pour un échantillon de données d'entrée particulier, le circuit de traitement (11, 15b) est en outre configuré pour :
former un second ensemble de données d'apprentissage sur la base de cet échantillon de données d'entrée particulier ; et
mettre à jour le premier ensemble de données d'apprentissage avec le second ensemble de données d'apprentissage formé pour l'entraînement de l'ensemble de modèles ML afin de résoudre la tâche en utilisant le premier ensemble de données d'apprentissage mis à jour.

11. Système (10, 15) selon la revendication 10, dans lequel, pour l'ensemble de données d'entrée (200) formé sur la base de l'ensemble de données d'apprentissage synthétiques obtenu (202) :
ledit au moins un échantillon de données d'entrée (200a-200n) correspond à au moins un échantillon de données synthétiques (202a-202n) ;
dans lequel l'ensemble de données d'apprentissage synthétiques (202) est généré artificiellement pour construire un scénario dans un environnement proche d'un véhicule (1), et dans lequel le circuit de traitement (11, 15b) est en outre configuré pour :
déterminer la divergence dans la sortie de prédiction d'ensemble (204) pour un échantillon de données synthétiques particulier par la comparaison, pour chacun dudit au moins un échantillon de données synthétiques (202a-202n), de la sortie de prédiction (201a-201n) de chaque modèle ML de l'ensemble avec la sortie de prédiction de chacun des modèles ML restants compris dans l'ensemble ; et
en réponse à la divergence (205) déterminée dans la sortie de prédiction d'ensemble (204) pour cet échantillon de données synthétiques particulier, le circuit de traitement (11, 15b) est en outre configuré pour :
former le second ensemble de données d'apprentissage comprenant cet échantillon de données synthétiques particulier ; et
mettre à jour le premier ensemble de données d'apprentissage avec le second ensemble de données d'apprentissage formé pour l'entraînement de l'ensemble de modèles ML afin de résoudre la tâche en utilisant le premier ensemble de données d'apprentissage mis à jour.

12. Système (10-15) selon la revendication 10, dans lequel, pour l'ensemble de données d'entrée (200) formé sur la base de l'ensemble de données d'apprentissage non étiquetées obtenu (203) :
ledit au moins un échantillon de données d'entrée (200a-200n) correspond à au moins un échantillon de données non étiquetées (203a-203n) ;
dans lequel l'ensemble de données d'apprentissage non étiquetées (203) comprend des informations obtenues au moins partiellement à partir d'un système de capteurs d'un véhicule et étant représentatives d'un scénario dans un environnement proche du véhicule (1), et dans lequel le circuit de traitement (11, 15b) est en outre configuré pour :
déterminer la divergence dans la sortie de prédiction d'ensemble (204) pour un échantillon de données non étiquetées particulier par la comparaison, pour chacun dudit au moins un échantillon de données non étiquetées (203a-203n), de la sortie de prédiction (201a-201n) de chaque modèle ML de l'ensemble avec la sortie de prédiction de chacun des autres modèles ML restants compris dans l'ensemble ; et
en réponse à la divergence (205) déterminée dans la sortie de prédiction d'ensemble (204) pour cet échantillon de données non étiquetées particulier, le circuit de traitement (11, 15b) est en outre configuré pour :
identifier au moins un paramètre spécifique à une condition provoquant la divergence déterminée pour cet échantillon de données non étiquetées particulier ;
générer un ensemble de données d'apprentissage synthétiques spécifiques à une condition comprenant au moins un échantillon de données synthétiques spécifiques à une condition représentatif dudit au moins un paramètre spécifique à une condition identifié pour cet échantillon de données non étiquetées particulier ;
former le second ensemble de données d'apprentissage comprenant l'ensemble de données d'apprentissage synthétiques spécifiques à une condition généré ; et
mettre à jour le premier ensemble de données d'apprentissage avec le second ensemble de données d'apprentissage formé pour l'entraînement de l'ensemble de modèles ML afin de résoudre la tâche en utilisant le premier ensemble de données d'apprentissage mis à jour.

13. Système (10, 15) selon l'une quelconque des revendications 10 à 12, dans lequel le circuit de traitement (11, 15b) est configuré pour déterminer la divergence dans la sortie de prédiction d'ensemble (204) pour l'échantillon de données d'entrée particulier lorsque la sortie de prédiction (201a-201n) générée par au moins un des modèles ML (ML₁-MLₙ) compris dans l'ensemble (100) est différente (210) des sorties de prédiction (201a-201n) générées par au moins un des autres modèles ML de l'ensemble pour cet échantillon de données d'entrée particulier.

14. Système (10, 15) selon l'une quelconque des revendications 10 à 13, dans lequel le circuit de traitement (11, 15b) est en outre configuré pour :
entraîner l'ensemble de modèles ML en utilisant le premier ensemble de données d'apprentissage mis à jour.

15. Véhicule (1) comprenant :
au moins un capteur monté sur véhicule (324) configuré pour surveiller un environnement proche du véhicule (1) ;
un système de localisation (322) configuré pour surveiller une position géographique du véhicule ; et
un système (10, 15) selon l'une quelconque des revendications 10 à 14.
